# EUROPEAN PATENT SPECIFICATION

(11) **EP 4 448 975 B1**
(45) Date of publication and mention of the grant of the patent: **22.07.2026**
(21) Application number: 22830438.2
(22) Date of filing: 02.12.2022
(51) Int. Cl.: F16B 43/00

(54) **AN ADJUSTABLE SPACER**
EINSTELLBARER ABSTANDSHALTER
ÉLÉMENT D'ESPACEMENT RÉGLABLE

(30) Priority: 17.12.2021 GB 202118393
(43) Date of publication of application: 23.10.2024
(73) Proprietor: Ocado Innovation Limited, Hatfield, Hertfordshire AL10 9UL (GB)
(72) Inventor: KIRKBY, Oliver, Hatfield, Hertfordshire AL10 9UL (GB); WYNN, Leslie, Hatfield, Hertfordshire AL10 9UL (GB)
(74) Representative: Ocado Group IP Department
(86) International application number: PCT/EP2022/084295
(87) International publication number: WO 2023/110466

(56) References cited:
- WO-A1-2019/238702
- US-A1- 2019 240 517
- US-B2- 8 328 491

## Description

### Field of Invention

The present invention relates to the field of an adjustable spacer for varying the spacing between two bodies. More specifically, in the application of a grid framework structure for supporting remotely operated load handling devices for handling storage containers or bins stacked in the grid framework structure.

### Background

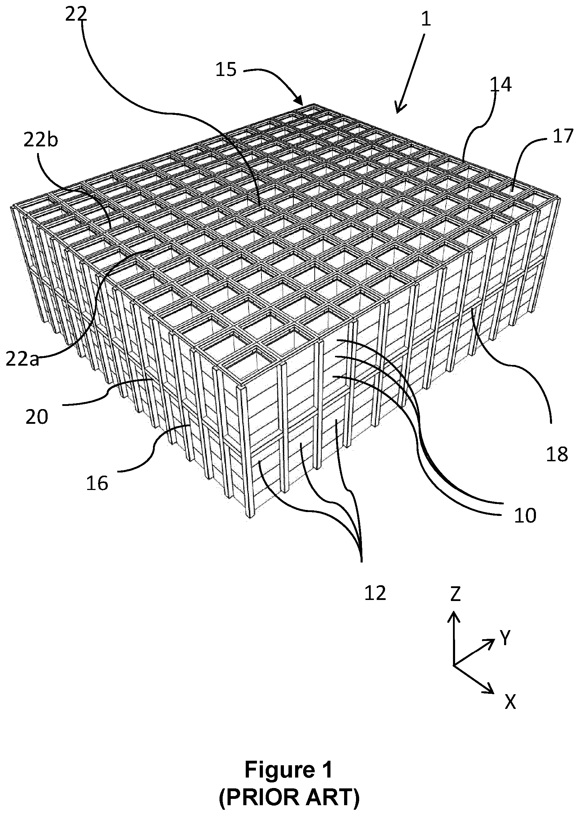

Storage systems 1 comprising a three-dimensional storage grid framework structure, within which storage containers/bins are stacked on top of each other, are well known. PCT Publication No. WO2015/185628A (Ocado) describes a known storage and fulfilment or distribution system in which stacks of bins or containers are arranged within a grid framework structure. The bins or containers are accessed by load handling devices remotely operative on tracks located on the top of the grid framework structure. A system of this type is illustrated schematically in Figures 1 to 3 of the accompanying drawings.

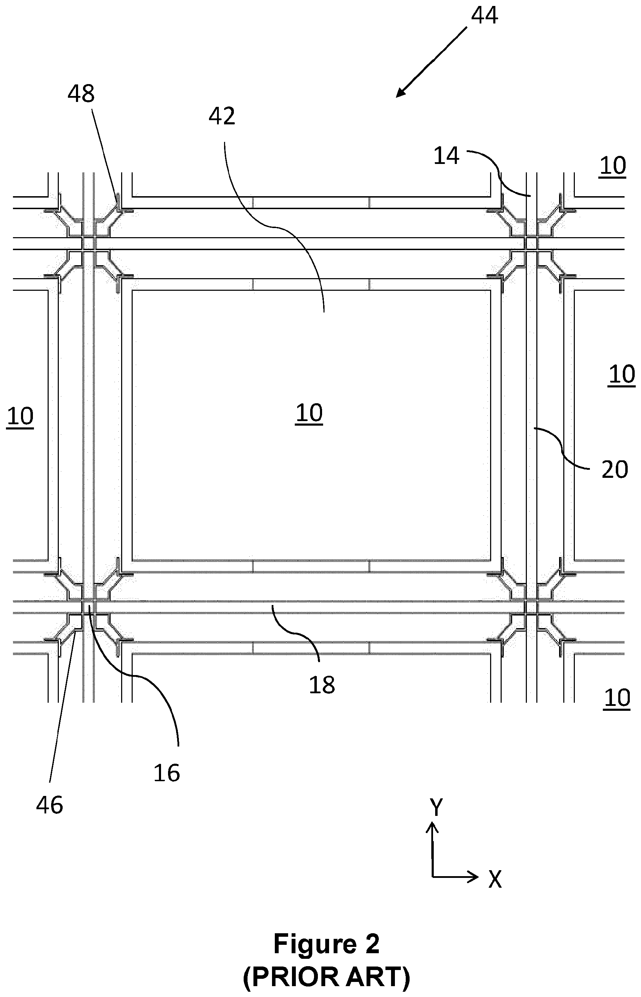

As shown in Figures 1 and 2, stackable containers, known as storage bins or containers 10, are stacked on top of one another to form stacks 12. The stacks 12 are arranged in a three dimensional grid framework structure 14 in a warehousing or manufacturing environment. The grid framework is made up of a plurality of storage columns or grid columns. Each grid in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

In detail, the three dimensional grid framework structure 14 comprises a plurality of vertical uprights or upright members or upright columns 16 that support horizontal grid members 18, 20. A first set of parallel horizontal grid members 18 is arranged perpendicularly to a second set of parallel horizontal grid members 20 to form a grid structure or grid 15 comprising a plurality of grid cells 17. The grid cell has an opening to allow a load handling device to lift a container or storage bin through the grid cell. In the grid structure, the first set of parallel horizontal grid members 18 intersect the second set of parallel horizontal grid members at nodes. The grid structure is supported by the upright members 16 at each of the nodes or at the point where the grid members intersect such that the upright members are interconnected at their tops ends by the intersecting grid members. The grid members 16, 18, 20 are typically manufactured from metal and typically welded or bolted together or a combination of both. The storage bins or containers 10 are stacked between the upright members 16 of the grid framework structure 14, so that the upright members 16 guards against horizontal movement of the stacks 12 of bins 10, and guides vertical movement of the storage bins 10.

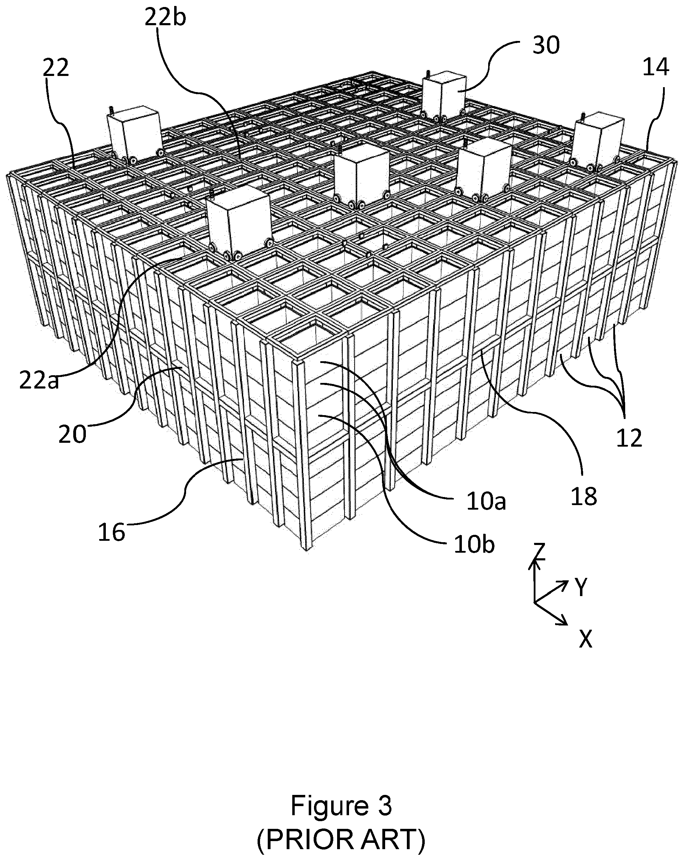

The top level of the grid framework structure 14 includes rails 22 arranged in a grid pattern across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

A known load handling device otherwise known as a bot 30 shown in Figure 4 and 5 comprising a vehicle body 32 is described in PCT Patent Publication No. WO2015/019055 (Ocado), where each load handling device 30 only covers a single grid space or grid cell of the grid framework structure 14. Here, the load handling device 30 comprises a wheel assembly comprising a first set of wheels 34 consisting of a pair of wheels on the front of the vehicle body 32 and a pair of wheels 34 on the back of the vehicle 32 for engaging with the first set of rails or tracks to guide movement of the device in a first direction, and a second set of wheels 36 consisting of a pair of wheels 36 on each side of the vehicle 32 for engaging with the second set of rails or tracks to guide movement of the device in a second direction. Each of the sets of wheels are driven to enable movement of the vehicle in X and Y directions respectively along the rails. One or both sets of wheels can be moved vertically to lift each set of wheels clear of the respective rails, thereby allowing the vehicle to move in the desired direction, e.g. X or Y direction on the grid structure.

The load handling device 30 is equipped with a lifting device or crane mechanism to lift a storage container from above. The crane mechanism comprises a winch tether or cable 38 wound on a spool or reel (not shown) and a grabber device 39 in the form of a lifting frame. The lifting device comprise a set of lifting tethers 38 extending in a vertical direction and connected nearby or at the four corners of the lifting frame 39, otherwise known as the grabber device (one tether near each of the four corners of the grabber device) for releasable connection to a storage container 10. The grabber device 39 is configured to releasably grip the top of a storage container 10 to lift it from a stack of containers in a storage system of the type shown in Figure 1 and 2.

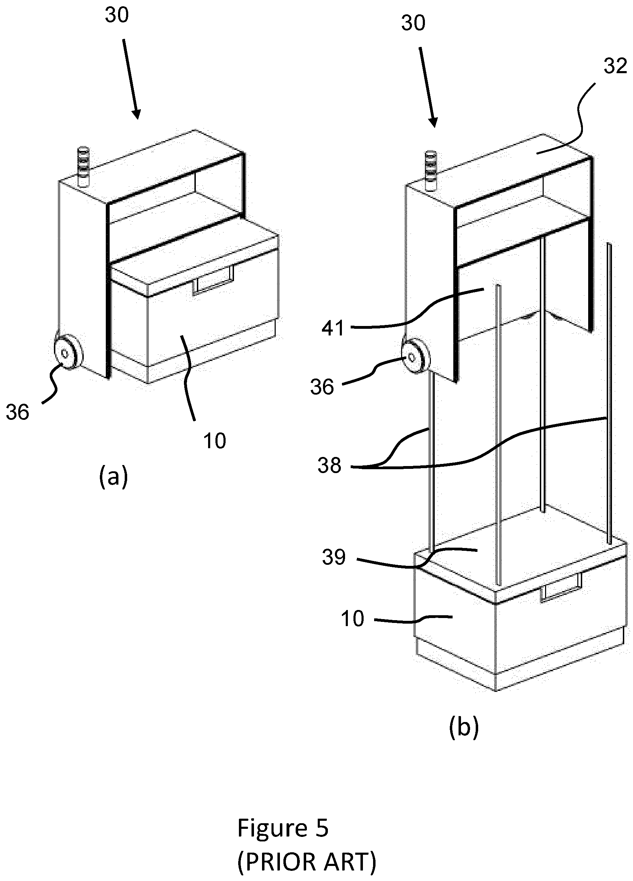

The wheels 34, 36 are arranged around the periphery of a cavity or recess, known as a container-receiving recess 41, in the lower part. The recess is sized to accommodate the container 10 when it is lifted by the crane mechanism, as shown in Figure 5 (a and b). When in the recess, the container is lifted clear of the rails beneath, so that the vehicle can move laterally to a different location. On reaching the target location, for example another stack, an access point in the storage system or a conveyor belt, the bin or container can be lowered from the container receiving portion and released from the grabber device. The container receiving space may comprise a cavity or recess arranged within the vehicle body, e.g. as described in WO 2015/019055 (Ocado Innovation Limited). Alternatively, the vehicle body of the load handling device may comprise a cantilever as taught in WO2019/238702 (Autostore Technology AS), in which case the container receiving space is located below a cantilever of the load handing device. In this case, the grabber device is hoisted by a cantilever such that the grabber device is able to engage and lift a container from a stack into a container receiving space below the cantilever.

To erect the grid framework structure in the art, a plurality of vertical uprights are individually positioned in a grid-like pattern on the ground. A sub-group of the vertical uprights are braced together to provide structural stability to the grid framework structure. The vertical uprights are interconnected at their top ends by grid members so that the grid members adopt the same grid pattern as the vertical uprights, i.e. the vertical uprights support the grid members at the points where the grid members intersect in the grid pattern. For the purpose of explanation of the present invention, the points or junctions where the grid members intersect or are interconnected constitute the nodes of the grid structure and correspond to the area where the grid structure is supported by a vertical upright. The resultant grid framework structure can be considered as a free standing rectilinear assemblage of upright columns supporting the grid formed from intersecting horizontal grid members, i.e. a four wall shaped framework.

As one or more load handling devices are operative on the grid structure, it is paramount that the grid structure lies in a substantially horizontal plane as this will affect the direction in which the containers or storage bins are hoisted into the correct position through a grid cell. If the level of the grid structure deviates from the horizontal plane, this will not only put a strain on the one or more load handling devices travelling on the grid structure, but also will cause the lifting tethers to sway to one side depending on the direction of the deviation, and in a worst case scenario, cause the grabber device to fail to engage with the container or storage bin below. The problem is exacerbated when the floor on which the grid framework structure is installed is uneven. Traditionally, the level of the grid structure mounted on the vertical uprights is adjusted by having an adjustable levelling foot at the base or lower end of the vertical uprights to compensate for an uneven floor. The level of the grid structure is adjusted by tentatively adjusting the adjustable levelling foot at the base of one or more vertical uprights in a grid framework structure and checking the level of the grid structure at the top of the grid structure each time an adjustment is made, e.g. by use of a suitable levelling measurement instrument such as a laser level commonly known in the art. In a majority of cases, this requires the use of specialist tooling to rotate a threaded shaft to allow the height of the adjustable levelling foot to be varied. However, the problem with this approach is that the separation between the adjustable foot and the grid structure, which can be in excess of 21 containers or storage bins high, would make incremental adjustments to the level of the grid structure at the uppermost level laborious and time consuming due to this separation. Moreover, given the weight and the changeable forces to which the grid framework structure is continuously subjected during its operation, the initially level grid structure may become uneven over time, requiring the level of the grid structure to be periodically adjusted. This requires a user to identify the area of unevenness in the grid structure and to adjust the base of the grid framework structure, which involves adjusting one or more adjustable levelling feet at the base of one or more vertical uprights and periodically inspecting the level of the grid structure on top. The time and effort to periodically inspect the level of the grid structure at the top of the structure and adjust the adjustable levelling feet at the base of the grid framework structure becomes a problem as the inspection of the level of the grid is not truly being carried out in real time where the adjustments are being made.

US 10,660,438 (Autostore Technology AS) has attempted to mitigate this problem by providing a self-adjusting levelling foot comprising a base having a raised, hollow column. A spring is arranged in the hollow column. A moveable top piece engages the column, and is movable in the vertical direction against the force of the spring. The top piece is slightly larger than the column, such that side walls of the top piece overlap the sides of the column when the spring is compressed. The bottom edges of the side walls of the top piece are angled. A generally U-shaped wedge device is provided that may be pressed into engagement with the base, whereby a leg of the U engages each side of the column. The top surfaces of the legs of the U-shaped device are angled in the form of wedges, the angles of the top surfaces of the legs corresponding to the angles of the side walls of the movable top piece. In that manner, the side walls of the top piece will rest upon the angled top surfaces of the legs of the wedge device when the top piece is under load. However, the problem with this grid levelling mechanism is that in the event that the floor were to sink, it would be necessary that the U-shaped wedge device be pressed further forward to achieve a stable base of the support. Again, this requires measurement of the grid level at the top.

An adjustable grid levelling mechanism is thus required that allows the level of the grid structure to be adjusted easily. An axially expanding spacer is known from US 8 328 491 B2.

This application claims priority from GB application number 2118393.4 filed 17 December 2021.

### Summary of Invention

In addition to having benefits for adjusting the level of a grid structure, the present invention has wider uses for adjusting the spacing between any two bodies. Thus, the present invention provides an adjustable spacer for adjusting the spacing between two bodies, according to claim 1, comprising:
i) a first rotatable indexing mechanism, the first rotatable indexing mechanism configured to rotate in a first rotational direction about a rotational axis;
ii) a second rotatable indexing mechanism, the second rotatable indexing mechanism configured to rotate in a second rotational direction about the rotational axis, the second direction being opposite to the first direction;
wherein the first and second rotatable indexing mechanisms are configured such that rotation of the first rotatable indexing mechanism by a given angular rotation in the first rotational direction about the rotational axis changes the length of the adjustable spacer along the rotational axis by a first length, and rotation of the second rotatable indexing mechanism in the second rotational direction by the same given angular rotation about the rotational axis changes the length of the adjustable spacer along the rotational axis by a second length, the second length being different to the first length.

To provide coarse and fine levels of adjustment to the length of the adjustable spacer, the second length is different to the first length, optionally, the first length is less than the second length. The first and second rotatable indexing mechanisms are mounted coaxially such that their respective rotational axes are coaxial, i.e. both the first and second rotatable indexing mechanisms can both rotate about the same rotational axis. For example, the first and second rotational directions about the rotational axis of the first and second rotatable indexing mechanisms can be a clockwise and anti-clockwise direction respectively. The rotatable indexing mechanism of each of the first and second rotatable indexing mechanisms are configured to rotate one way about the rotational axis but is prevented from rotating in the opposite rotatable direction. In this way, the first rotatable indexing mechanism can be configured to rotate the second indexing mechanism, and therefore, provides the advantage of having a single point of engagement with the adjustable spacer to rotate both the first and second rotatable indexing mechanisms about their respective first and second rotational directions.

To enable rotation of both the first and second rotational directions from a single point of engagement with the adjustable spacer, the adjustable spacer comprises:
i) a first cam member rotatable about the rotational axis, the first cam member having a first mating face;
ii) a second cam member rotatable about the rotational axis, the second cam member having a second mating face; and
iii) an intermediate cam member interposed between the first cam member and the second cam member, the intermediate cam member being rotatable about the rotational axis and having a first intermediate mating face for engaging with the first mating face to provide the first rotatable indexing mechanism, and a second intermediate mating face for engaging with the second mating face to provide the second rotatable indexing mechanism;
wherein each mating face of the first intermediate mating face and the first mating face has a profile or contour with a variable thickness extending or varying in the circumferential direction such that rotation of the first cam member relative to the intermediate cam member in the first rotational direction about the rotational axis by the given angular rotation causes the length of the adjustable spacer along the rotational axis to change by the first length, and each mating face of the second intermediate mating face and the second mating face has a profile or contour with a variable thickness extending or varying in the circumferential direction such that rotation of the intermediate cam member relative to the second cam member in the second rotational direction opposite to the first rotational direction about the rotational axis by the same given angular rotation causes the length of the spacer along the rotational axis to change by the second length.

In the case where the adjustable spacer of the present invention is used to adjust the level of a grid structure, the thickness of the profile or contour is equivalent to the height of the profile or contour of the mating face.

Preferably, the profile or contour of each of the first intermediate mating face and the first mating face is configured so as to either prevent the intermediate cam member rotating relative to the first cam member in the second rotational direction or prevent the first cam member rotating relative to the intermediate cam member in the second rotational direction, and the profile or contour of each of the second intermediate mating face and the second mating face is configured so as to prevent the intermediate cam member rotating relative to the second cam member in the first rotational direction.

For example, the first rotatable indexing mechanism can be a first ratchet mechanism and the second rotatable indexing mechanism can be a second ratchet mechanism such that each of the first intermediate mating face and the first mating face comprises a plurality of teeth to provide the first ratchet mechanism, and each of the second intermediate mating face and the second mating face comprises a plurality of teeth to provide the second ratchet mechanism. Optionally, each of the plurality of teeth of the first and second indexing mechanisms is wedge shaped.

By having first and second rotatable indexing mechanisms being rotatable about the same rotational axis via a single point of engagement with the adjustable spacer, the adjustable spacer according to the present invention can be used to provide a fine level of adjustment of the length of the adjustable spacer in the first rotational direction about the rotational axis and a coarse level of adjustment of the length of the adjustable spacer in the second rotational direction about the rotational axis. In other words, contra-rotation of the first and the second rotatable indexing mechanism provide coarse and fine level of adjustments of the length of the adjustable spacer, and thus, enables the coarse and fine adjustments to be made independently. The plurality of teeth allows rotation in one rotational direction about the rotational axis but locks in the other rotational direction as the plurality of teeth engage. For example, the plurality of teeth of the mating face of the first cam member rides over the plurality of teeth of the intermediate cam member in the first rotational direction about the rotational axis but engages when attempting to rotate in the second rotational direction.

The length of the adjustable spacer is adjustable by, preferably, configuring the mating face of each of the first intermediate mating face and the first mating face to comprise at least one first ramp, said at least one first ramp being inclined such that rotation of the first cam member by the given angular rotation relative to the intermediate cam member in the first rotational direction changes the length of the adjustable spacer along the rotational axis by the first length; and the mating face of each of the second intermediate mating face and the second mating face comprises at least one second ramp, said at least one second ramp being inclined such that rotation of the intermediate member by the given angular rotation relative to the second cam member in the second rotational direction changes the length of the adjustable spacer along the rotational axis by the second length. The terms 'first ramp' and 'first type ramp' are used interchangeably throughout the application. Similarly, the terms 'second ramp' and 'second type ramp' are used interchangeably throughout the application.

To ensure the stability of the adjustable spacer, more specifically the stability of each of the first, second cam members and the intermediate cam member when mounted together such that their respective rotational axes are coaxial, the at least one first and/or second ramp comprises three or more ramps. Three ramps provides a "tripod" effect at the mating faces. However, the present invention is not limited to three ramps and can be any number of ramps. To vary the length of the adjustable spacer when any one of the first and second cam members rotates relative to the intermediate cam member about the rotational axis, alternatively, the profile or contour of the first and second mating faces and the first and second intermediate faces are helical.

To provide coarse and fine level of adjustments of the adjustable spacer for a given angular rotation about the rotational axis, the at least one first ramp is shallower than the at least one second ramp. The angle that the ramp makes with the underside of the cam member controls the length adjustment of the adjustable spacer. A more steeply inclined ramp provides a coarser adjustment of the length of the adjustable spacer. Conversely, a shallower or gentler inclined ramp provides a finer adjustment of the length of the adjustable spacer. Equally, where the profile of the mating faces are helical, the steepness of the helical profile controls the separation of the cam members when rotating about the rotational axis and thus, the length of the adjustable spacer.

To independently provide both a coarse and fine level of adjustments, optionally, the first and second intermediate mating faces cooperate with the first and second mating faces respectively such that rotation of the first cam member in the second rotational direction about the rotational axis rotates the intermediate cam member relative to the second cam member in the second rotational direction. Thus, the rotation of the first cam member in the first rotational direction about the rotational axis rotates the first cam member relative to the intermediate cam member and rotation of the first cam member in the second rotational direction (contra-rotation to the first rotational direction) rotates the intermediate cam member relative to the second cam member in the second rotational direction. This is made possible since the mating surfaces between the first cam member and the intermediate cam member provide a first ratchet mechanism and the mating surfaces of the intermediate cam member and the second cam member provide a second ratchet mechanism; the first ratchet mechanism provides rotation of the first cam member relative to the intermediate cam member in the first rotational direction but not in the second rotational direction, and the second ratchet mechanism provides rotation of the intermediate cam member relative to the second cam member in the second rotational direction but not in the first rotational direction. To enable rotation of the first cam member in the first rotational direction about the rotational axis and rotation of the intermediate cam member to rotate about the second rotational direction about the rotational axis relative to the second cam member, preferably, the second cam member is fixed (i.e. prevented from rotating) such that the intermediate cam member rotates relative to the second cam member in the second rotational direction about the rotational axis.

To provide rotation of the first and second indexing mechanisms by rotation of the first cam member, optionally, the first cam member comprises a plurality of teeth extending externally around the periphery or externally of the first cam member for engaging with a pinion. The plurality of teeth extending around the periphery of the first cam member allows rotation of the first cam member about the rotational axis via engagement with an external adjustment tool. Preferably, the adjustment tool is a pinion that is able to mesh with the plurality of teeth around the periphery of the first cam member and rotate the first cam member in the first and second rotational directions about the rotational axis to provide both coarse and fine adjustments of the length of the adjustable spacer.

To enable the first and second cam members and the intermediate cam member to rotate about their respective rotational axis that are substantially co-axial, optionally, each of the first cam member and the intermediate cam member is ring shaped. For the purpose of the present invention, the term "ring shaped" is construed to include any shape of plate or body with a hole (typically in the middle) that is normally used to distribute the load across the cam member. Preferably, the ring shaped cam member is an annular plate or body, e.g. a washer.

To provide an indication of the length of the adjustable spacer each time the first cam member is rotated in either the first and the second rotational direction, optionally, each of the first and second cam members and the intermediate cam member comprises at least one marker for measuring the position of any one of the first cam member and/or the intermediate cam members and/or the second cam member relative to each other. For example, the angular position of the first cam member relative to the second cam member can provide an indication of the angular rotation of the first cam member relative to the second cam member. The different angular rotations of the first cam member relative to the second cam member can be calibrated to the different lengths of the adjustable spacer. The angular position of the first cam member relative to the intermediate cam member can be determined by a marker on the first and intermediate cam members. The same principle applies with respect to the angular position of the intermediate cam member relative to the second cam member.

Applying the adjustable spacer of the present invention to adjust the level of a grid structure of a three dimensional grid framework structure comprising a plurality of vertical uprights, the plurality of vertical uprights supporting the grid structure, the present invention provides an adjustable grid levelling mechanism, according to claim 8, for adjusting the level of a grid structure of a grid framework structure. The plurality of vertical uprights can form part of a pre-fabricated panel braced by one or more bracing members extending between the plurality of vertical uprights. The grid framework structure can be formed from a plurality of pre-fabricated panels arranged in a grid pattern to form a supporting framework structure. The grid structure is supported or mounted on the supporting framework structure to form the grid framework structure according to an example of the grid framework structure of the present invention. The grid structure comprises a plurality of grid members arranged in a grid pattern comprising a plurality of grid cells. The adjustable grid levelling mechanism comprises a base for mounting to the top or upper end of a vertical upright, a mounting head for a grid structure to be mounted thereon, and an extendible section interposed between the base and the mounting head such that the mounting head is moveable relative to the base, wherein said extendible section comprises the adjustable spacer according to the present invention.

Optionally, the base comprises a spigot or insert for mounting to a vertical upright. The spigot can be integrated into the second cam member for mounting the second cam member to the vertical upright. The spigot fixes the second cam member to the vertical upright so as to permit the first cam member to rotate relative to the intermediate cam member in the first rotational direction and the intermediate cam member to rotate relative to the second cam member in the second rotational direction through a single point of engagement with the first cam member.

For the adjustable spacer to be interposed between the grid structure and one or more of the plurality of vertical uprights, optionally, the mounting head comprises a rail cross member comprising four perpendicular ends, each of the four perpendicular ends being configured for supporting separate grid members in a grid pattern. The rail cross support is configured for connecting the grid members extending in the first and second direction to the vertical uprights. More specifically, the plurality of vertical uprights are interconnected at their upper ends by the first set of grid members extending in the first direction and the second set of grid members extending in the second direction, i.e. at the junction where the first set of grid members intersect with the second set of grid members in the grid structure. The rail cross member interconnects the first and second sets of grid members to the vertical uprights at the junction where the first and second sets of grid members intersect in the grid structure. The junction where the first set and second set of grid members intersect in the grid structure is commonly known as a node. To mount the adjustable spacer to the vertical upright, optionally, the second cam member comprises a spigot for mounting to a vertical upright at the node of the grid structure.

The present invention further provides a grid framework structure, according to claim 9, configured to support one or more load handling devices thereupon, said grid framework structure comprising:
i) a grid structure comprising a first set of grid members extending in a first direction and a second set of grid members extending in a second direction, the second set of grid members running transversely to the first set of grid members in a substantially horizontal plane and in a grid pattern comprising a plurality of grid cells;
ii) a plurality of vertical uprights for supporting the grid structure, the plurality of vertical uprights being interconnected at their upper ends by the first set of grid members and the second set of grid members; and
iii) an adjustable grid levelling mechanism of the present invention interposed between the at least one of the plurality of vertical uprights and the grid structure at one or more of the interconnections of the plurality of vertical uprights, wherein the adjustable spacer is configured for adjusting a vertical distance between the at least one of the plurality of vertical uprights and the grid structure.

By interposing the adjustable grid levelling mechanism between the at least one of the plurality of vertical uprights and the grid structure, the measurement and operation of the adjustable grid levelling mechanism can be done from the same position. This has the advantage that fewer operators are needed to measure and adjust the grid level. As a result, the adjustments of the grid level can be made in real time as opposed to measuring the grid level first and then subsequently making the necessary adjustments, which might not be precise, requiring further adjustments to be made at the foot of the vertical uprights. Another advantage of mounting the grid structure on the adjustable grid levelling mechanism is that the components of the adjustable grid levelling mechanism do not have to bear the full weight of the vertical uprights, since the adjustable grid levelling mechanism is transferred to the upper end of the vertical uprights. This provides the grid framework structure with greater flexibility to anchor the lower end of the vertical uprights on a more substantial foot that provides more lateral stability than can be provided by the adjustable grid levelling mechanism alone. Moreover, a threaded screw shaft known in the art to adjust the height, and thus level, of the grid structure, which tends to bear the full weight of the grid structure and one or more load handling devices operative on the grid structure, may become worn over time. This results in the threaded shaft cross threading, removing its ability to adjust its height, i.e. move in a vertical direction. Such a vulnerability is not present where the adjustable spacer comprises opposing mating faces since the load is distributed or spread across a greater surface area of the mating faces of the cam members rather than the threads of a shaft. For the purpose of the present invention, the grid level represents the orientation of the grid structure in the horizontal plane. By adjusting the height at one or more areas of the grid structure, the orientation of the grid structure in the horizontal plane is adjusted.

Preferably, the plurality of vertical uprights are arranged to form a plurality of vertical storage locations for one or more containers to be stacked between the vertical uprights and be guided by the vertical uprights in a vertical direction. Preferably, the grid structure is mounted to the adjustable grid levelling mechanism at one or more of the interconnections of the plurality of vertical uprights.

The present invention further provides a robotic grid levelling device, according to claim 12, for moving on the grid structure according to the present invention, comprising:
A) a wheel assembly comprising:
   i) a first set of wheels for moving the robotic levelling device in the first direction;
   ii) a second set of wheels for moving the robotic levelling device in the second direction;
B) a drive mechanism for selectively driving the first and/or the second set of wheels; and
C) an adjustment tool configured for rotating the first and/or second rotatable indexing mechanisms in their respective first and second rotational directions about the rotational axis.

Optionally, the adjustment tool comprises a pinion for engaging with the first and/or second rotatable indexing mechanism. The measurement of the vertical position of the robotic grid levelling device at different positions on the grid structure relative to one or more fixed reference points can provide an indication of the level of the grid structure. Multiple measurements of the vertical position of the robotic load handling device at different positions on the grid structure can be used by a control system to determine the orientation or the plane in which the grid structure lies and whether adjustments are necessary to any one of the adjustable grid levelling mechanisms interposed between the grid structure and the vertical uprights to ensure that the grid structure lies in a substantially horizontal plane.

In a further aspect of the present invention, a method of levelling a grid structure of a grid framework structure, according to claim 13, is provided, the method comprising the steps of:
i) measuring a first vertical position of a robotic grid levelling device at a first grid cell of the grid structure relative to one or more fixed reference points;
ii) moving the robotic levelling device on the grid structure to a second grid cell on the grid structure;
iii) measuring a second vertical position of the robotic levelling device on the grid structure at the second grid cell relative to the one or more fixed reference points;
iv) calculating the difference between the measured second vertical position and the first vertical position,
whereby:
v) if the calculated difference is greater than a predetermined value, adjusting the length of the adjustable spacer by engaging the adjustable tool with the adjustable spacer so as to rotate the first and/or second rotatable indexing mechanisms in their respective first and/or second rotational directions about the rotational axis until the calculated difference is less than a predetermined value;
vi) repeating steps (i) to (iv) until the grid structure lies in a substantial horizontal plane.

Optionally, the one or more fixed reference points are located at one or more corners of the grid structure. Ideally, the predetermined value is substantially equal to zero such that, all being fixed, the vertical position of the robotic levelling device at different grid cells does not change significantly, indicative that the portion of the grid structure covered by the different grid cells lies in a substantially horizontal plane. The process of measuring the vertical position of the robotic levelling device at different grid cells covering different portions of the grid structure is repeated and if necessary, adjustments are made to their respective adjustable grid levelling mechanism such that the difference in the vertical position lies within a predetermined value. Optionally, the level of the grid structure is set to a predetermined datum level and the vertical position of the robotic grid levelling device is adjusted relative to the predetermined datum level.

The vertical position of the robotic levelling device can be determined by measuring the angle of the robotic levelling device from one or more of the fixed reference points and knowing the distance between the fixed reference points, the measured angles can used to determine the vertical position of the robotic levelling device relative to the fixed reference points, and hence, the vertical position on the grid structure. An example of measuring the vertical position of the robotic levelling devices relative to a plurality of fixed reference points is through use of one or more total stations by a process of triangulation. Preferably, the first and second vertical positions of the robotic levelling device are measured by one or more total stations at one or more of the fixed reference points, each of one or more total stations comprising a transmitter device at one or more of the plurality of fixed reference points for illuminating the robotic levelling device with light of at least one wavelength and a receiver device at the one or more of the plurality of the fixed reference points for receiving the light reflected from the robotic levelling device. One or more mirrors can be mounted to the robotic levelling device for reflecting the light transmitted to it from the fixed reference points. The reverse is equally applicable where the robotic levelling device transmits at least one wavelength of light to one or more of the fixed reference points and a receiver for receiving the light reflected from the one or more fixed reference points. The fixed reference points comprise one or more mirrors for reflecting the light transmitted from the transmitter.

The present invention further provides a grid levelling system, according to claim 15, comprising:
i) a grid framework structure of the present invention;
ii) a robotic levelling device operative on the grid structure of the grid framework structure;
iii) a control system comprising one or more processors and memory, storing instructions that when executed by the one or more processors cause the one or more processors to:
   a) measure a first vertical position of the robotic levelling device on the grid structure at a first grid cell on the grid structure relative to a plurality of fixed reference points on the grid structure;
   b) move the robotic levelling device to a second grid cell on the grid structure;
   c) measure a second vertical position of the robotic levelling device at the second grid cell on the grid structure relative to the plurality of fixed reference points on the grid structure;
   d) calculate the difference between the second vertical position and the first vertical position;
wherein:
if the calculated difference is greater than a predetermined value, adjusting the length of the adjustable spacer by engaging the adjustable tool with the adjustable spacer so as to rotate the first and/or second rotatable indexing mechanisms in their respective first and second rotational directions about the rotational axis until the calculated difference is less than the predetermined value.

### Description of Drawings

Further features and aspects of the present invention will be apparent from the following detailed description of an illustrative embodiment made with reference to the drawings, in which:
Figure 1 is a schematic diagram of a grid framework structure according to a known system.
Figure 2 is a schematic diagram of a top down view showing a stack of bins arranged within the framework structure of Figure 1.
Figure 3 is a schematic diagram of a known storage system of a load handling device operating on the grid framework structure.
Figure 4 is a schematic perspective view of the load handling device showing the lifting device gripping a container from above.
Figure 5(a) and 5(b) are schematic perspective cut away views of the load handling device of Figure 4 showing (a) a container accommodated within the container receiving space of the load handling device and (b) the container receiving space of the load handling device.
Figure 6 is a perspective view showing the arrangement of the tracks and track supports interconnected at their nodes or intersections by a cap plate.
Figure 7 is a perspective view of a track support.
Figure 8 is a perspective view of a cap plate for interconnecting the vertical uprights to the grid members at the nodes.
Figure 9 is a perspective cross sectional view of the interconnection of the vertical uprights to the grid members by the cap plate at a node.
Figure 10 is a perspective view of a track or rail.
Figure 11 is a perspective view showing four vertical uprights making up a storage space or storage column within a grid framework structure.
Figure 12 is a perspective view of a known adjustable grid levelling mechanism at the foot of a vertical upright.
Figure 13 is a perspective view of the known adjustable grid levelling mechanism shown in Figure 12.
Figure 14 is a perspective view of an adjustable spacer according to an embodiment of the present invention.
Figure 15 is an expanded view of the adjustable spacer shown in Figure 14.
Figure 16(a and b) is a perspective view showing the different adjustments to the length of the adjustable spacer provided by (a) the second indexing mechanism; and (b) the first indexing mechanism.
Figure 16c is a perspective view of an alternative embodiment shown in Figure 16(a and b) of the different adjustments to the length of the adjustable spacer provided by the first and second indexing mechanisms.
Figure 17 is a perspective view of the adjustable grid levelling mechanism interposed between a portion of the grid structure and the vertical upright according to the first embodiment of the present invention.
Figure 18 is a perspective view of an adjustable grid levelling adjustable mechanism comprising the adjustable spacer of Figure 14 to 16(a and b) of the present invention.
Figure 19 is an expanded view of the adjustable grid levelling adjustable mechanism shown in Figure 18 comprising a mounting head for supporting the grid structure.
Figure 20 is a perspective view of a section of the grid framework structure showing the mounting of the grid structure to the vertical uprights by the adjustable grid levelling mechanism.
Figure 21 is a perspective view of the engagement of a pinion with the adjustable spacer.
Figure 22 is a perspective view of the engagement of the pinion with the adjustable spacer through the grid structure.
Figure 23 is a perspective view of a robotic grid levelling device operable on the grid structure.
Figure 24 is a perspective view of a robotic grid levelling device operable on the grid structure interacting with a total station at one or more fixed reference points to measure the vertical position of the robotic levelling device on the grid structure.
Figure 25 is a flowchart of an exemplary process of levelling the grid structure by the robotic grid levelling device.

### Detailed Description

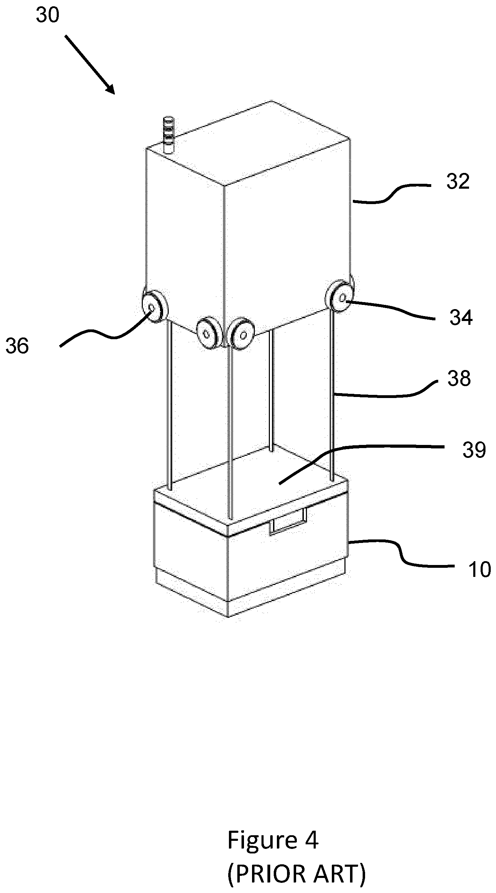

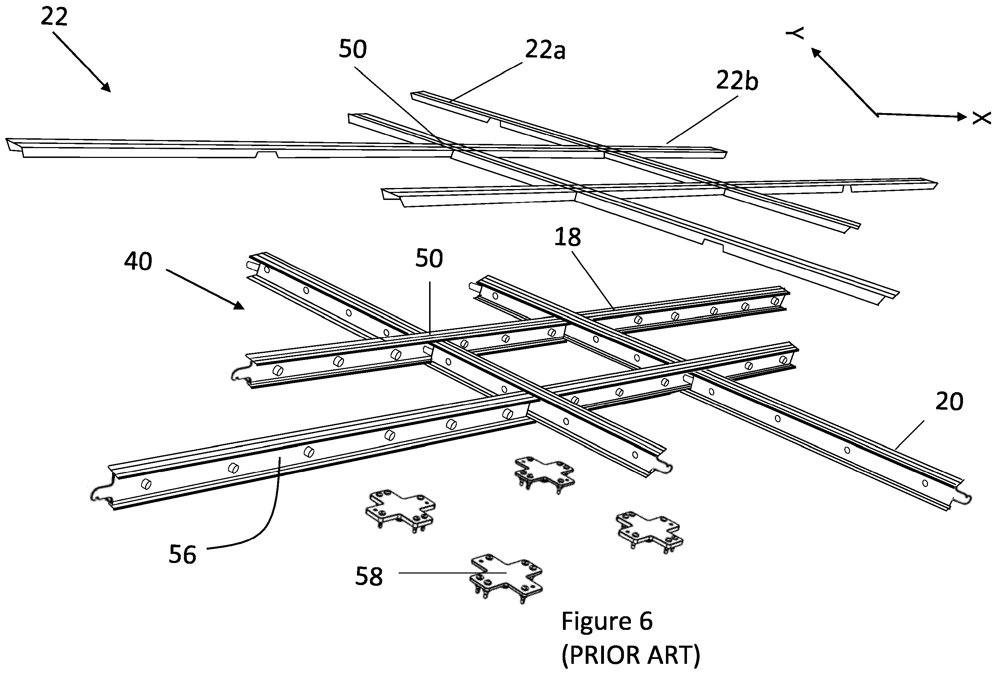

It is against the known features of the storage system such as the grid framework structure and the load handling device described above with reference to Figures 1 to 5, that the present invention has been devised. As shown in Figure 6, a grid structure 40 for guiding the movement of one or more load handling devices comprises a first set of parallel grid members extending in a first direction and a second set of parallel grid members extending in a second direction, the first direction being substantially perpendicular to the second direction to form a plurality of rectangular or square frames constituting grid cells. More specifically a first set of grid members extend in a first direction and a second set of grid members extend in a second direction, the second set of grid members running transversely to the first set of grid members in a substantially horizontal plane, i.e. the grid structure is represented by Cartesian coordinates in the X and Y direction. Each of the grid members can comprise a track support 18, 20 and/or a track or rail 22a, 22b whereby the track or rail 22a, 22b is mounted to the track support 18, 20. A load handling device is operative to move along the track or rail 22a, 22b of the present invention. Alternatively, the track 22a, 22b can be integrated into the track support 18, 20 as a single body, e.g. by extrusion. In the particular embodiment of the present invention, the grid member comprises a track support 18, 20 and a track 22a, 22b whereby the track or rail 22a, 22b is mounted to the track support 18, 20.

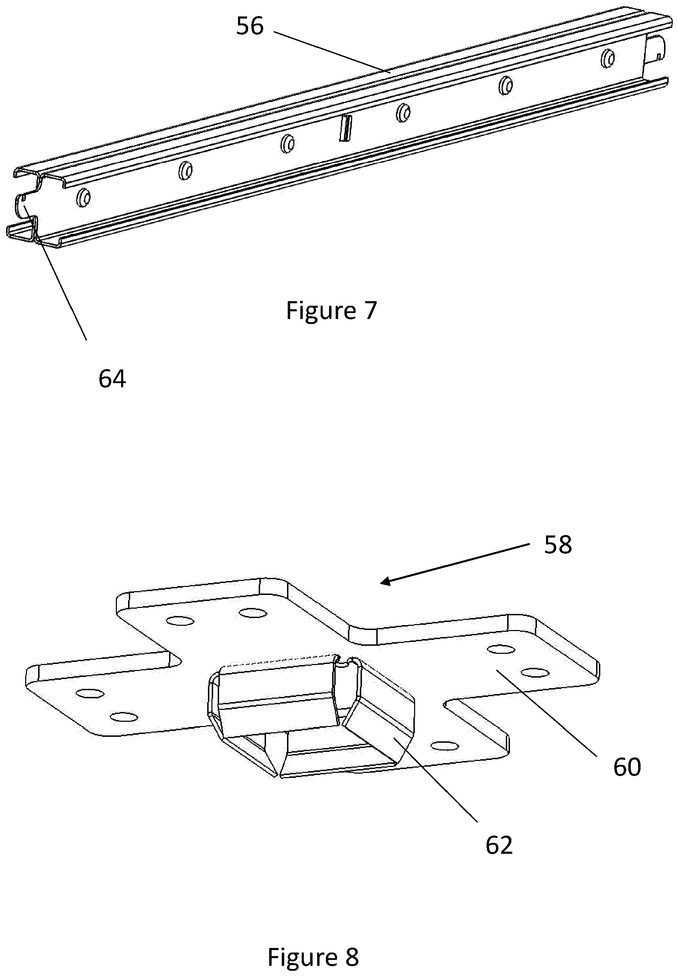

Typically, at least one grid member in a set, e.g. a single grid member, can be sub-divided or sectioned into discrete grid elements that can be joined or linked together to form a grid member extending in the first direction or in the second direction. Where the grid members comprise a track support 18, 20, the track support can also be sub-divided into discrete track support elements that are linked together to form the track support. The discrete track support elements making up a track support extending in the first axial direction and in the second axial direction are shown in Figure 6. An individual track support element 56 used to make up a track support 18, 20 is shown in Figure 7. The track support 18, 20 in transverse cross section can be a solid support of C-shaped or U-shaped or I-shaped cross section or even double-C or double-U shaped support. In the particular embodiment of the present invention, the track support element 56 comprises double back-to-back C sections bolted together.

A connection plate or cap plate 58 as shown in Figure 6 and Figure 8 can be used to link or join the individual track support elements 56 together in both the first and the second direction at the junction where multiple track support elements cross in the grid structure 40, i.e. the cap plate 58 is used to connect the track support elements 56 together to vertical uprights 16. As a result, the vertical uprights 16 are interconnected at their upper ends at the junction where the multiple track support elements cross in the grid structure 40 by the cap plate 58, i.e. the cap plate is located at the node 50 of the grid structure 40. For the purpose of explanation of the present invention, the points or areas where the grid members intersect or cross as shown in Figure 6 can be defined as nodes or intersections 50. It is clearly apparent from the layout of at least a portion or section of a known grid structure 40 constituting a single grid cell 42 shown in Figure 6 that each intersection or node 50 of the grid structure 40 is supported by a vertical upright 16.

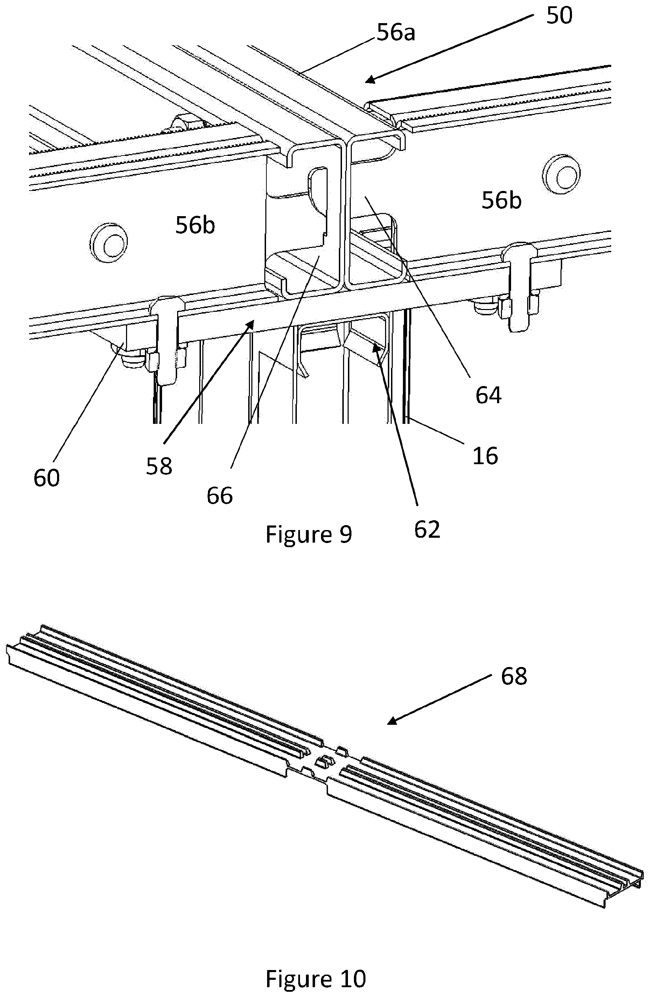

As shown in Figure 8, the cap plate 58 is cross shaped having four connecting portions 60 for connecting to the ends or anywhere along the length of the track support elements 56 at their intersections 50. The interconnection of the track support elements to the vertical uprights at the nodes by the cap plate 58 is demonstrated in the cross-sectional profile of the node 50 shown in Figure 9. The cap plate 58 comprises a spigot or protrusion 62 that is sized to sit in the hollow central section 46 of the vertical upright 16 in a tight fit for interconnecting the plurality of upright columns to the track support elements as shown in Figure 9. Also shown in Figure 9 are the track support elements 56a, 56b extending in both perpendicular directions corresponding to the first direction (x-direction) and the second direction (y-direction). The connecting portions 60 are perpendicular to each other to connect to the track support elements 56a, 56b extending in the first direction and in the second direction. The cap plate 58 is configured to be bolted to the ends of the track support elements 56a, 56b or along the length of the track support elements. The track support elements 56a, 56b are arranged to interlock with one another at the nodes to form the grid structure 40 according to the present invention. To achieve this, distal or opposing ends of each of the track support elements 56a, 56b comprise locking features 64 for interconnecting to corresponding locking features 66 of adjacent track support elements. In the particular embodiment of the present invention, opposing or distal ends of one or more track support elements comprise at least one hook or tongue 64 that is receivable in openings or slot 66 midway of an adjacent track support element 56 at the junction where the track support elements cross in the grid structure 40. Referring back to Figure 7 in combination with Figure 9, the hooks 64 at the end of a track support element 56 are shown received in an opening 66 of an adjacent track support element extending across a vertical upright 16 at the junction where the track support elements 56 cross. Here, the hooks 64 are offered up to an opening 66 either side of a track support element 56b. In the particular embodiment of the present invention, the opening 66 is half way along the length of the track support element 56 so that when assembled together, adjacent parallel track support elements 56 in the first direction and in the second direction are offset by at least one grid cell. This is demonstrated in Figure 6.

To complete the grid structure 40 once the track support elements 56 are interlocked together to form a grid pattern comprising track supports 18 extending in the first direction and track supports 20 extending in the second direction, a track 22a, 22b is mounted to the track support elements 56. The track 22a, 22b is either snap-fitted and/or fitted over the track support 18, 20 in a slide fit arrangement (see Figure 6). Like the track support of the present invention, the track comprises a first set of tracks 22a extending in the first direction and a second set of tracks 22b extending in the second direction, the first direction being perpendicular to the second direction. A first set of tracks 22a is sub-divided into multiple track elements 68 in the first direction such that, when assembled, adjacent parallel track elements in the first direction are offset by at least once grid cell. Similarly, a second set of tracks 22b is sub-divided into multiple track elements 68 in the second direction such that when assembled adjacent track elements in the second direction are offset by at least one grid cell. This is demonstrated in Figure 6. An example of a single track element 68 is shown in Figure 10. As with the track support elements, multiple track elements in the first direction and the second direction are laid together to form a track in both directions. The fitting of the track element 68 to the track support 18, 20 comprises an inverted U-shaped cross-sectional profile that is shaped to cradle or overlap the top of the track support 18, 20. One or more lugs extending from each branch of the U-shape profile engage with the ends of the track support 18, 20 in a snap fit arrangement. Equally plausible in the present invention is that the track 22a, 22b can be integrated into the track supports 18, 20 rather than being separate components.

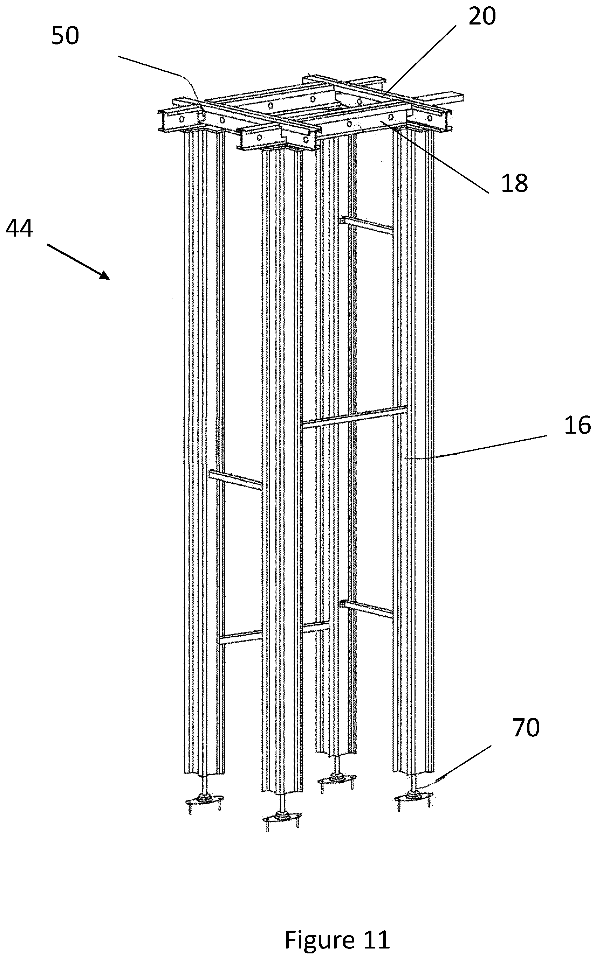

As shown in Figure 11, the vertical uprights are typically arranged so that a single grid cell 42 is supported by four vertical uprights 16 to form a single storage column 44 for the storage of one or more containers 10 in a stack. The transverse cross-section in the horizontal plane of the storage location 44 in Figure 2 shows that an individual storage column 44 is made up of four vertical uprights 16 arranged at the corners of the container or storage bin 10. A storage column 44 corresponds to a single grid cell. The cross section of the vertical upright 16 is constant over the whole length of the vertical upright. The periphery of a container or storage bin in the horizontal plane in Figure 2 shows the container or storage bin having four corners and the arrangement of four vertical uprights 16 at the corners of the containers or storage bins within the storage column 44. A corner section of each of the four vertical uprights, one from each of the four vertical uprights, ensure that a container or storage bin stored in the storage column 44 is guided into a correct position relative to any container or storage bin stored within the storage column and the stacks of containers or storage bins in the surrounding storage columns. A load handling device operative (not shown) on the grid structure 40 is able to lift a container or storage bin as it is guided along the vertical uprights 16 through a grid cell 42.

The term "vertical upright(s)", "upright member(s)" and "upright column(s)" are used interchangeably in the description to mean the same thing. Each of the vertical uprights 16 is generally tubular. In detail as shown in Figure 2, each of the vertical uprights 16 comprises a hollow centre section 46 (typically a box section) with one or more guides 48 mounted to or formed at the corners of the hollow centre section 46 that extends along the longitudinal length of the vertical upright 16 for guiding the movement of the containers along the storage column 44. The one or more guides 48 comprise two perpendicular container guiding plates. The two perpendicular container guiding plates are arranged to accommodate a corner of a container or a corner of a stack of containers. In other words, each of the corners of the hollow centre section 46 defines two sides of a substantially triangular area which may accommodate a corner of a container or storage bin. The corners are evenly arranged around the hollow centre section 46, such that multiple vertical uprights 16 may provide multiple adjacent storage columns, wherein each vertical upright 16 may be common or shared for up to four separate storage columns.

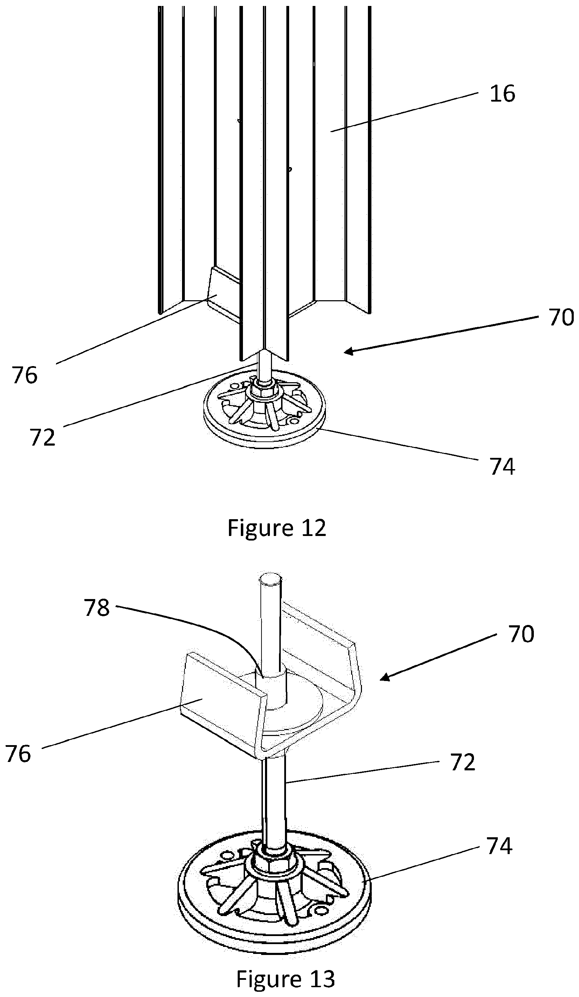

Also shown in Figure 11 and in Figure 12 is that each of the vertical uprights 16 is mounted to an adjustable grid levelling mechanism 70 at the foot of the vertical uprights comprising a base and a threaded shaft that can be extended or retracted to compensate for an uneven floor. Further detail of the adjustable grid levelling mechanism is discussed below. It should be noted that the present invention is not limited to the grid structure being supported at each of the intersections or nodes of the grid structure. The grid structure can be supported at any section or portion of the grid structure. For example, the grid structure can be supported just at the corners of the grid structure. In this case, the connection or cap plate 58 comprises at least two perpendicular connecting portions 60 for connecting to the ends or anywhere along the length of the track support elements at their intersections 50, e.g. at the corner of the grid structure.

As shown in Figure 11 and in detail in Figure 12 and 13, the vertical uprights are anchored to the floor, more specifically a concrete foundation, by an adjustable foot 70 comprising a threaded shaft 72 that can be extended or retracted to compensate for an uneven floor. By virtue of its name, the adjustable foot or adjustable anchor foot 70 is mounted to the lower end of the vertical upright 16. The adjustable foot 70 as shown in Figure 13 comprises a base plate 74 and a threaded spindle or rod 72 that is threadingly engageable with a separate push fit cap or plug 76. The push fit cap 76 is arranged to be fitted to the lower end of the vertical upright 16 in a tight fit so as to adjust the height of the vertical upright 16. The push fit cap 76 as shown in Figures 12 and 13 comprises bent portions that are arranged to seat the lower end of the vertical upright 16, more specifically around the box section. In use, the threaded spindle 72 threadingly engages with the threaded hole 78 of the push fit cap 76. Rotation of the threaded spindle 72 varies the distance between the base plate 74 resting on the floor and the push fit cap 76, and thereby varies the height of the vertical upright 16 in the grid framework structure. Traditionally, the grid level is measured at the upper end of the vertical upright each time adjustments are made to the adjustable foot 70 at the lower end of the vertical upright. As a result, correcting the level of the grid structure necessitates two operators; one at the top of the grid framework structure to measure the level of the grid structure 40, and one at the bottom of the grid framework structure to make the necessary adjustments to the height of the vertical uprights.

### Adjustable Spacer

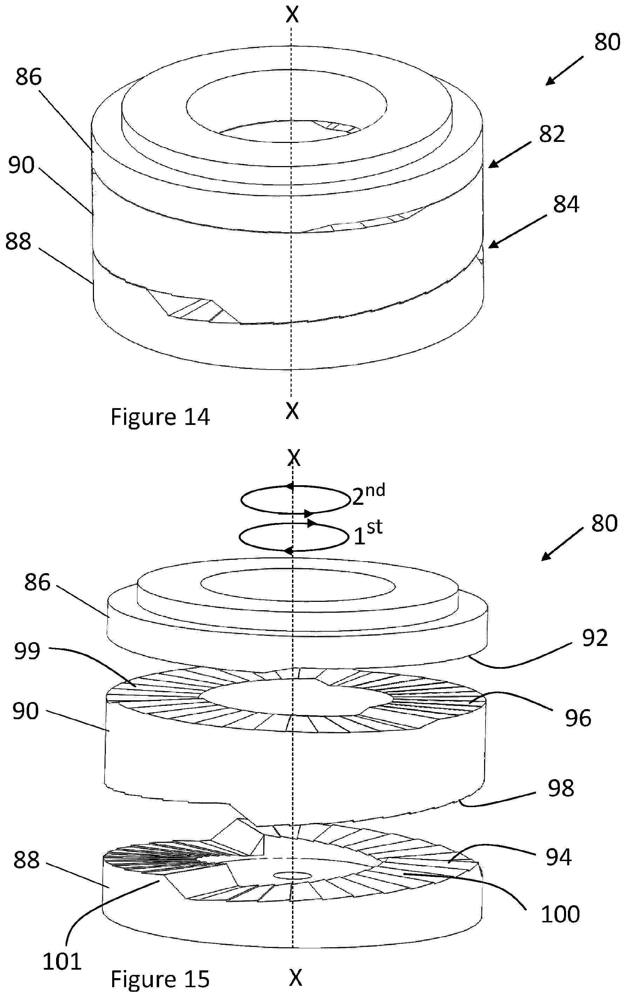

Figure 14 is a perspective view of an adjustable spacer 80 according to an embodiment of the present invention. Whilst in a preferred embodiment of the present invention, the adjustable spacer 80 according to an exemplary embodiment of the present invention is interposed between the top of the vertical upright and the grid structure so as to allow adjustment of the grid level to be made at the point where the measurement of the grid level is being carried out, the adjustable spacer has wider practical uses where adjustment of the separation between two bodies is required. According to the invention, the adjustable spacer 80 comprises a first rotatable indexing mechanism 82 and a second rotatable indexing mechanism 84. The first and second rotatable indexing mechanisms are rotatable about first and second rotatable axes respectively that are substantially coaxial, i.e. rotatable about the same rotational axis X-X. The first and second rotatable indexing mechanisms 82, 84 are each configured to be rotatable relative to each other in one rotational direction about the rotational axis X-X but cannot rotate in the contra rotational direction.

According to the invention, the adjustable spacer 80 comprises an assembly of cam members rotatable about an axis that are substantially coaxial, namely a first cam member 86, a second cam member 88 and an intermediate cam member 90 interposed between the first 86 and second cam member 88.

The first, second and the intermediate cam members 86, 88, 90 are mounted co-axially such that each of the first, second and the intermediate cam members have opposing engageable mating faces. In the case where the intermediate cam member 90 is interposed between the first cam member 86 and the second cam member 88, the mating face of the first cam member 86 opposite one mating face of the intermediate cam member 90 are engageable and the mating faces of the second cam member 88 opposite the other mating face of the intermediate cam member 90 are engageable. For ease of explanation, the mating face of the first cam member 86 is termed a first mating face 92, the mating face of the second cam member 88 is termed a second mating face 94, and the opposing mating faces of the intermediate cam member 90 are termed the first 96 and second 98 intermediate mating faces respectively. In comparison to a threaded shaft as found in prior art grid level adjustment mechanisms which bears the weight of the grid structure on the threads of the shaft and so is prone to cross threading, the mating of the faces 92, 94, 96, 98 of the first 86, second 88 and intermediate 90 cam members provides the advantage of distributing the load across the mating faces, and therefore the adjustable spacer is able to withstand heavier loads than a threaded shaft. The first, second and intermediate cam members 86, 88, 90 are annular or ring shaped so as to enable them to be mounted on a carrier or seat comprising a shaft (not shown) in order for the mating faces 92, 94 of the first and second cam members 86, 88 to engage with the respective opposing mating faces 96, 98 of the intermediate cam member 90 and rotate about a substantial coaxial rotational axis X-X. One or more slip rings of a lower friction material can be interposed between the carrier and the outer faces of the adjustable spacer so as to enable rotation of the cam members of the adjustable spacer relative to the carrier.

The first, second and intermediate cam members 86, 88, 90 are seated or assembled on top of each other such that their respective mating faces or the opposing faces cooperate. The mating faces 92, 94, 96, 98 of the first, second and intermediate cam members are clearly shown in the expanded view of the adjustable spacer in Figure 15. Here, the first mating face 92 of the first cam member 86 is arranged to engage with the first intermediate mating face 96 of the intermediate cam member 90 to provide the first indexing mechanism 82, and the second mating face 94 of the second cam member 88 is arranged to engage with the second intermediate mating face 98 of the intermediate cam member 90 to provide the second indexing mechanism 84. During rotation of the first cam member 86 about the rotational axis X-X, the first mating face 92 rides over the first intermediate mating face 96 of the intermediate cam member 90, and during rotation of the intermediate cam member 90 about the rotational axis X-X, the second intermediate mating face 98 rides over the second mating face 94 of the second cam member 88. The first and second indexing mechanisms 82, 84 are configured so as to allow rotation of the first cam member 86 in one rotational direction (first rotational direction) but not in a contra rotation about the rotational axis X-X relative to the intermediate cam member 90. The intermediate cam member 90 is allowed to rotate in one rotational direction (second rotational direction) about the rotational axis X-X relative to the second cam member 88 but not in a contra rotation (first rotational direction).

In the particular embodiment of the present invention, the first mating face 92 and the first intermediate mating face 96 of the first and intermediate cam members 86, 90 respectively comprise a plurality of teeth 99 to provide the first indexing mechanism 82. The second mating face 94 and the second intermediate mating face 98 of the second and intermediate cam members 88, 90 respectively comprise a plurality of teeth 100 to provide the second indexing mechanism 84. The plurality of teeth 99 of the first mating face 92 and the first intermediate mating face 96 are wedge shaped and orientated so as to allow rotation of the first cam member 86 relative to the intermediate cam member 90 in the first rotational direction about the rotational axis X-X but not in the second rotational direction. Similarly, the plurality of teeth 100 of the second mating face 94 and the second intermediate mating face 98 are wedge shaped and orientated so as to allow rotation of the intermediate cam member 90 relative to the second cam member 88 about the rotational axis X-X in the second rotational direction but not in the first rotational direction. The ability of the mating faces to be configured to allow rotation in one direction but not in a contra direction allows the rotation of the first and second indexing mechanisms 82, 84 to be made from a single point of engagement with the adjustable spacer 80. For example, rotating the first cam member 86 in the first rotational direction about the rotational axis rotates the first cam member 86 relative to the intermediate cam member 90. However, since the first cam member cannot rotate in the second rotational direction about the rotational axis relative to the intermediate cam member due to engagement of the plurality of teeth 99 of the first mating face 92 with the plurality of teeth of the first intermediate mating face 96, rotation of the first cam member 86 in the second rotational direction about the rotational axis forces the intermediate cam member 90 to rotate in the second rotational direction about the rotational axis relative to the second cam member 88. As a result, both the first and second rotational directions of the first cam member 86 and the second cam member 88 relative to the intermediate cam member 90 can be achieved by rotating the first cam member 86 in contra rotational directions. This could be, for example, in the clockwise and anti-clockwise direction.

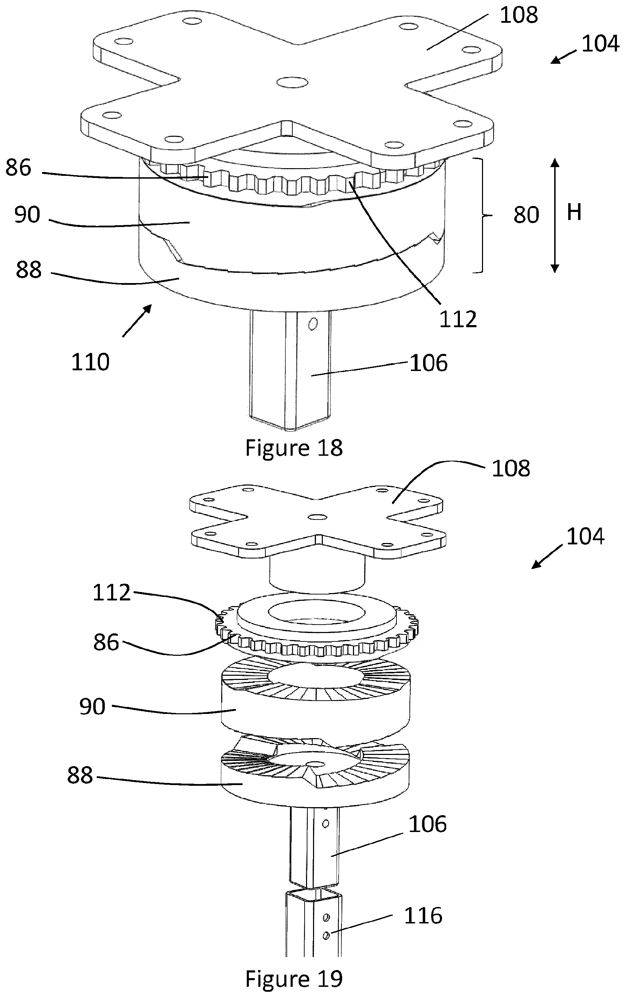

In the particular embodiment of the present invention, the single point of engagement of the adjustable spacer is provided by a plurality of teeth 112 arranged around the outer or external periphery of the first cam member for engaging with a pinion (see Figure 18). In other words, the first cam member 86 is formed as a gear that is able to mesh with the gears of the pinion. By engaging the pinion with the gear of the first cam member 86, the pinion is able to rotate the first cam member 86 in both contra first and second rotational directions about the rotational axis. However, other means to rotate the first cam member are applicable in the present invention. These include but are not limited to various adjustment tools that would be able to engage with and rotate the first cam member relative to the intermediate cam member and/or second cam member. For example, an edge or side of the first cam member can comprise one or more openings that are sized to receive one or more pins to manually rotate the first cam member relative to the intermediate cam member and/or the second cam member.

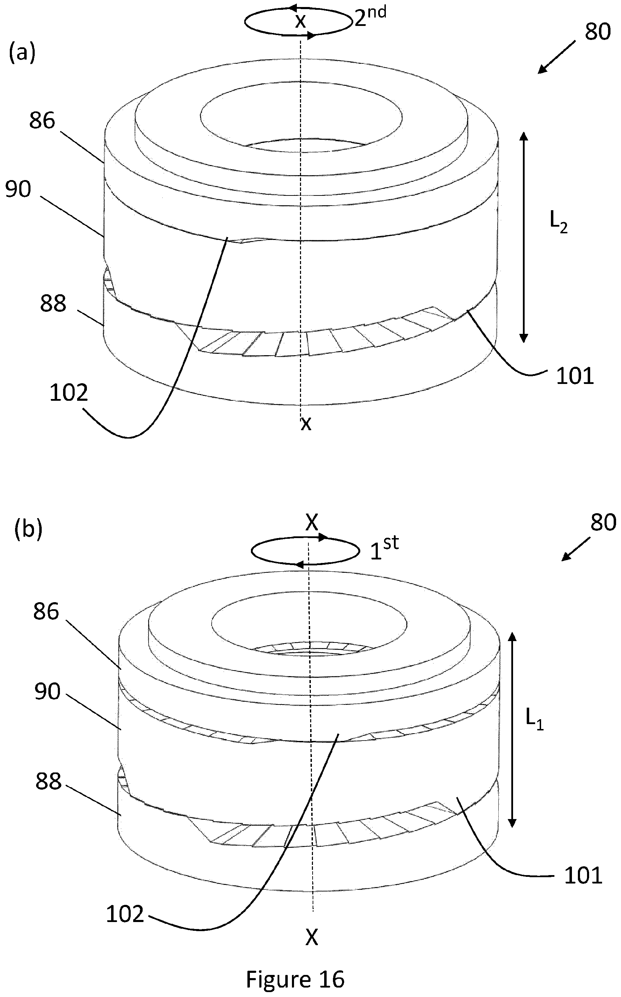

The mating faces or opposing faces of the first, second and intermediate cam members 86, 88, 90 have a profile or contour with a variable length around the circumferential direction of their respect first, second and intermediate cam members 86, 88, 90 such that rotation of the first cam member 86 by a given angular rotation in the second rotational direction about the rotational axis X-X causes the intermediate cam member 90 to rotate relative to the second cam member 88 which in turn cause the length of the adjustable spacer to be adjusted by a second predetermined length L₂ (see Figure 16a). Conversely, rotating the first cam member 86 by the same given angular rotation in the first rotational direction opposite the second rotational direction about the rotational axis X-X causes the first cam member 86 to rotate relative to the intermediate cam member 90 which in turn causes the length of the adjustable spacer to be adjusted by a first predetermined length L₁ (see Figure 16b). Equally plausible in the present invention is that the plurality of teeth between the mating faces are orientated such that rotation of the first cam member 86 in the first rotational direction about the rotational axis X-X causes the intermediate cam member 90 to rotate relative to the second cam member 88, and rotation of the first cam member 86 in the second rotational direction about the rotational axis causes the first cam member 86 to rotate relative to the intermediate cam member 90. The contour or profile of the first mating face 92 and the first intermediate mating face 96 can be contoured to provide a different level of adjustment to the length of the adjustable spacer 80 for a given angular rotation than the contour or profile of the second mating face 94 and the second intermediate mating face 98. This has the advantage of providing a coarse level of adjustment in the length of the adjustable spacer by rotating the first cam member 86 in one rotational direction and a fine level of adjustment in the length of the adjustable spacer by rotating the first cam member 86 in another contra rotational direction.

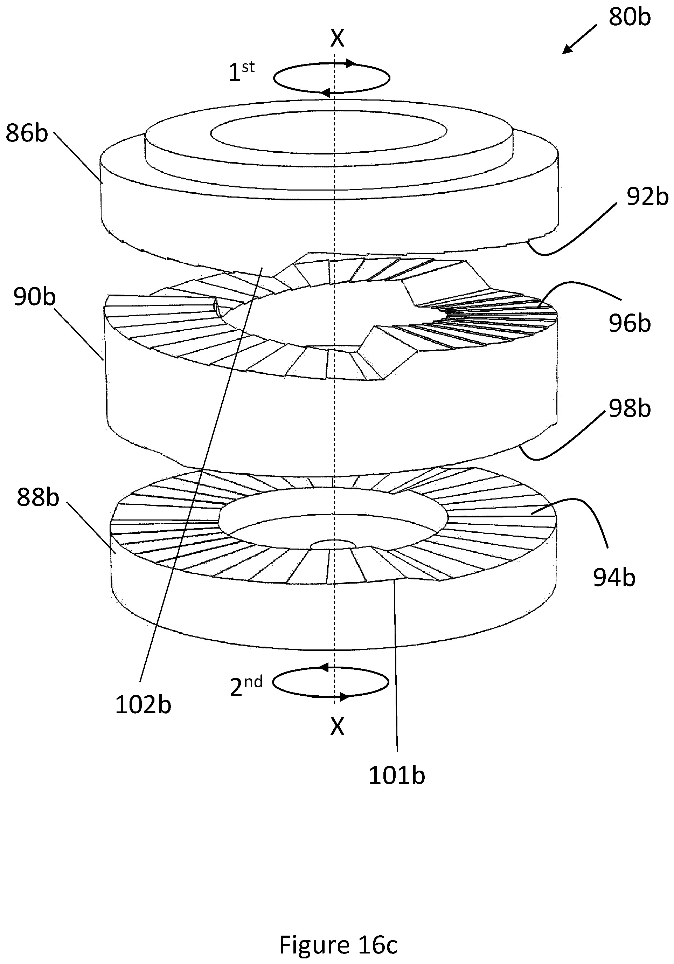

In the particular embodiment of the present invention shown in Figure 14 and 15, the mating faces 92, 94, 96, 98 of the first, second and intermediate cam members 86, 88, 90 comprise one or more ramps 101 such that when the first, second and intermediate cam members rotate relative to each other, the first, second and intermediate cam members ride over the one or more ramps 101 to increase the length of the adjustable spacer. The angle of inclination of the ramps to the horizontal or vertical depends on whether the adjustable spacer is mounted horizontally or vertically and controls the degree of adjustment in the length of the adjustable spacer for a given angular rotation of the first 86 or second cam members 88 relative to the intermediate cam member 90. A more steeply inclined angle provides a more coarse level of adjustment in the length of the adjustable spacer 80 and a gentler angle provides a finer level of adjustment in the length of the adjustable spacer 80 for a given angular rotation of the first 86 or second cam member 88 relative to the intermediate cam member 90. In the example shown in Figure 16(a and b), the one or more ramps 102 of the first mating face 92 of the first cam member 86 and the first intermediate mating face 96 of the intermediate cam member 90 is shallower than the one or more ramps 101 of the second mating face 94 of the second cam member 88 and the second intermediate mating face 98 of the intermediate cam member 90 such that rotation of the first cam member 86 in the first rotational direction about the rotational axis provides fine adjustment in the length of the adjustable spacer (see Figure 16b), and rotation of the first cam member 86 in the contra second rotational direction about the rotational axis to cause the intermediate cam member 90 to rotate relative to the second cam member 88 in the second rotational direction provides coarse adjustment in the length of the adjustable spacer. Each incremental rotation of the first cam member 86 relative to the intermediate cam member 90 locks the first cam member 86 from rotating in a contra rotational direction by virtue of the first indexing mechanism 82. Likewise, each incremental rotation of the intermediate cam member 90 relative to the second cam member 88 locks the intermediate cam member 90 from rotating in a contra rotational direction by virtue of the second indexing mechanism 84.

Whilst the particular embodiment shown in Figures 16a and 16b show the coarse adjustment being provided between the opposing mating faces 94, 98 of the second cam member 88 and the intermediate cam member 90, and the fine adjustment being provided between the opposing mating faces 92, 96 of the first cam member 86 and the intermediate cam member 90, the reverse is equally applicable. In an alternative embodiment of the adjustable spacer 80b shown in Figure 16c, the first mating face 92b of the first cam member 86b and the first intermediate mating face 96b of the intermediate cam member 90b are profiled to provide a coarse adjustment to the length of the adjustable spacer 80b. Likewise, the second mating face 94b of the second cam member 88b and the second intermediate mating face 98b of the intermediate cam member 90b are profiled to provide a fine adjustment to the length of the adjustable spacer 80b, i.e. the one or more ramps 102b of the opposing mating faces 92b, 96b of the first cam member 86b and the intermediate cam member 90b is more steeply inclined than the one or more ramps 101b of the opposing mating faces 94b, 98b of the second cam member 88b and the intermediate cam member 90b. Thus, rotation of the first cam member 86b relative to the intermediate cam member 90b in the first rotational direction about the rotation axis X-X provides coarse level of adjustment to the length of the adjustable spacer 80b and rotation of the intermediate cam member 90b relative to the second cam member in the second rotation direction about the rotational axis X-X provides fine level of adjustment to the length of the adjustable spacer 80b.

To improve the stability of the first, second and intermediate cam members when assembled together, the mating faces of the first, second and intermediate cam members comprise at least three ramps. The at least three ramps at the mating faces of the first, second and intermediate cam members provides a "tripod" effect so maintaining the orientation of the first, second and intermediate cam members when rotating relative to each other about the rotational axis. Alternatively, the profile or contour of the opposing mating faces of the first, second and intermediate cam members can be helical or spiral such that relative rotation of the first, second and intermediate cam members 86, 88, 90 relative to each other varies the length of the adjustable spacer 80.

Whilst the particular embodiment shown in Figures 14 and 15 describes two indexing mechanisms 82, 84 provided by the mating faces of the first, second and intermediate cam members 86, 88, 90 , the adjustable spacer 80 according to the present invention is not limited to two indexing mechanisms and can comprise a plurality of indexing mechanisms, each of the plurality of rotatable indexing mechanisms providing a different degree of adjustment to the length of the adjustable spacer for a given rotation of a separate rotatable indexing mechanism.

Equally plausible in the present disclosure but out of the scope of the appended claims is that the two indexing mechanisms provided by the mating faces of the first, second and intermediate cam members provide the same level of adjustment to the length of the adjustable spacer for a given rotation of the first cam member relative to the intermediate cam member and rotation of the intermediate cam member relative to the second cam member. This allows further adjustments to the length of the adjustable spacer 80 to be made should the first indexing mechanism 82 reach its maximum adjustment. Moreover, adjustment to the length of the adjustable spacer is not just limited to a single point of engagement where one cam member provides rotation to both the first and second cam member relative to the intermediate cam member. Adjustment can include rotating the other cam members in the assembly of cam members so as to allow the rotation of each of the cam members relative to each other.

### Grid Levelling Adjustment Mechanism

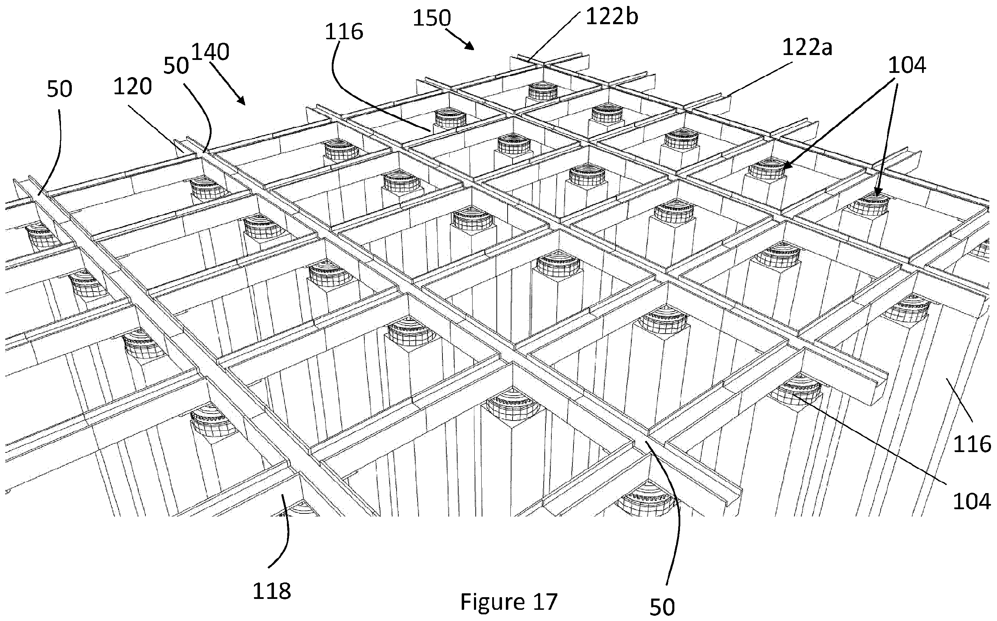

In a preferred application of the present invention, the adjustable spacer can be used to make adjustments to the level of a grid structure 150 discussed above. In this case, the adjustments to the length of the adjustable spacer represent adjustments being made to the height, H, of the adjustable spacer. In a preferred embodiment of the present invention, an adjustable grid levelling mechanism comprising the adjustable spacer discussed above is interposed between the top of the vertical upright and the grid structure. This allows the adjustment of the grid level to be made at the point where the measurement of the grid level is being carried out. Thus, adjustments of the grid level can be made in-situ or in real time as the grid level is measured. An example of transferring the adjustable grid levelling mechanism to the connection at the upper end of the vertical upright with the grid structure 140 is shown in Figure 17. In the particular embodiment of the present invention shown in Figure 17, the grid members comprise track supports 118, 120 that are connected together at a node or an intersection 50 of the grid structure 140 by the adjustable grid levelling mechanism 104 rather than being directly connected to the vertical upright via the cap plate as discussed above with reference to Figure 8. Also shown in Figure 17 are tracks 122a, 122b mounted to the track supports 118, 120. An individual adjustable grid levelling mechanism 104 shown in Figure 18 and 19 comprises a base 106 for mounting to the top end of the vertical upright 116, a mounting head 108 for mounting to the grid structure 140, and an extendible section 110 comprising the adjustable spacer 80 of the present invention interposed between the base 106 and the mounting head 108 such that the mounting head 108 is moveable relative to the base 106 in a vertical direction. The base 106 is configured to be mounted to an upper end of a vertical upright 116. In the particular embodiment of the present invention shown in Figure 18 and 19, the base 106 comprises an insert or spigot that is configured to be received in an open end of the box section at the upper end of the vertical upright 116. The insert 106 can be secured to the upper end of the vertical upright 116 by one or more bolts. To mount the adjustable spacer to the top of the vertical upright, the insert or spigot can form part of the second or lower cam member 88. This could be formed as an integral part of the second or lower cam member 88 or fixed to the second or lower cam member 88. When mounted to the top of the vertical upright, the insert or spigot prevents the second or lower cam member 88 from physically rotating so as to enable the intermediate cam member 90 to rotate relative to the second cam member 88 when adjustments are being made to the length of the adjustable spacer 80.

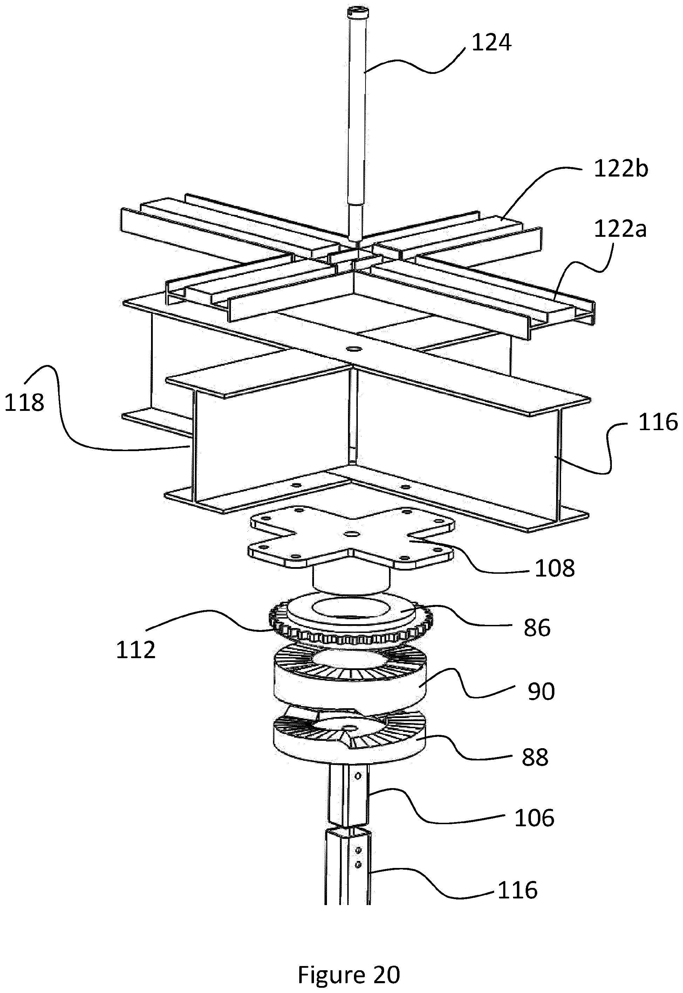

The mounting head 108 for mounting the grid structure 140 to the adjustable spacer 80 comprises a cap plate discussed above with reference to Figure 8 has been adapted to be mounted to the first cam member 86. In the particular embodiment of the present invention shown in Figure 19, the cap plate 108 comprises four connecting portions for connecting to the grid members 118, 120 at the nodes of the grid structure 140 by one or more bolts. The grid members 118, 120 shown in Figure 20 comprise track supports 118, 120 to which are mounted tracks or rails 122a, 122b. The track supports 118, 120 can be in the form of I-beams to provide the necessary structural support to the grid structure 140. The track supports 118, 120 are mounted to the cap plate 108 by the one or more bolts. Mounted to the track supports 118, 120 are tracks 122a, 122b for guiding one or more load handling devices on the grid structure 140 in the first direction and in the second direction on the grid structure. Instead of the spigot or insert of the cap plate being received directly into the top of the vertical upright as discussed above with reference to Figure 8, the spigot or insert is received within the openings of the first and intermediate cam members 86, 90. In the particular embodiment of the present invention shown in Figures 19 and 20, the first and intermediate cam members 86, 90 have a ring like or annular structure to accommodate the spigot or insert 106 of the cap plate 108. An optional slip ring can be interposed between the cap plate 108 and the first cam member 86 to ease rotation of the first cam member 86 relative to the cap plate 108. As the adjustable spacer 80 is interposed between the top of the vertical upright 116 and the cap plate 108, variation in the length of the adjustable spacer (in this case, height of the adjustable spacer) as a result of rotation of the first and/or second indexing mechanisms 82, 84 varies the separation between the cap plate 108 and the top of the vertical upright 116 relative to the ground. This in turn varies the height of the grid structure 140 at the intersection or node 50 connected by the adjustable grid levelling mechanism 104. By having a plurality of adjustable grid levelling mechanisms 104 shown in Figure 19 and 20 connecting the track supports 118, 120 at multiple nodes or intersections 50 of the grid structure 140, the level of the grid structure 140 can be adjusted at various points of the grid structure so that they all lie in the same horizontal plane. For example, in operation, if any given area of the grid structure is uneven, then one or more of its corresponding adjustable grid mechanisms 104 at the nodes 50 of the grid structure 140 can be adjusted by rotating the first and/or second indexing mechanisms 82, 84 about its rotational axis such that the grid structure in the given area becomes level with the rest of the grid structure. To adjust the adjustable grid levelling mechanism 104, the first cam member 86 can be rotated in a first rotational direction about the rotational axis to provide a fine level of adjustment of the height of the adjustable spacer 80 and/or the first cam member 86 can be rotated in a contra second rotational direction about the rotational axis to provide a coarse level of adjustment of the height of the adjustable spacer 80. Typically, a coarse level of adjustment is made first by rotating the first cam member 86 in the second rotational direction about the rotational axis followed by a fine level of adjustment by rotating the first cam member 86 in the first rotational direction about the rotational axis.

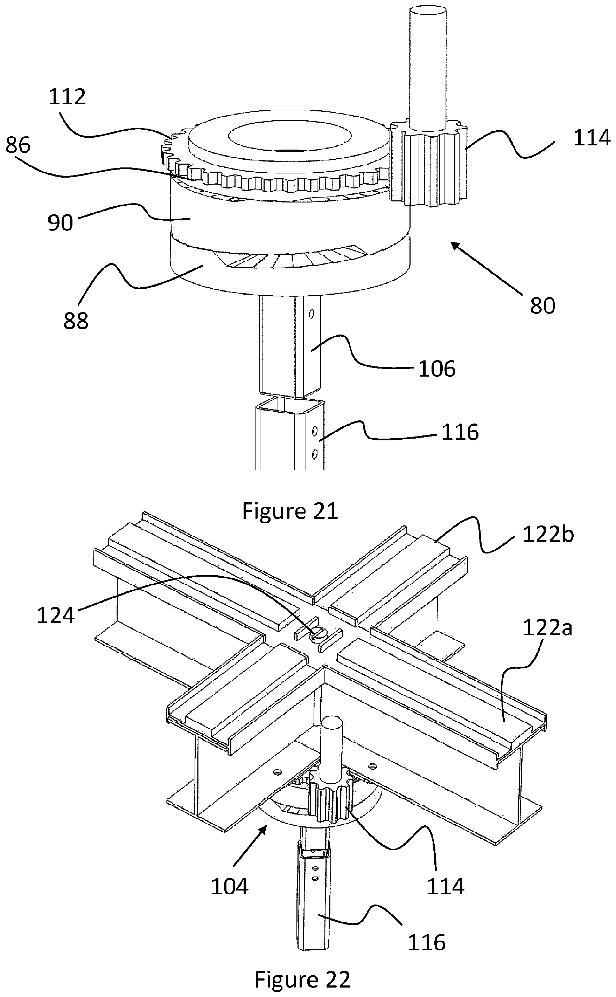

Also shown in Figures 18 to 23 is the plurality of teeth 112 around the outer periphery or circumferential edge of the first cam member 86 to enable a pinion 114 to engage or mesh externally with the plurality of teeth of the first cam member 86. Rotation of the pinion 114 in one rotational direction rotates the first cam member 86 in the same rotational direction about its rotational axis and rotation of the pinion 114 in the contra rotational direction rotates the first cam member 86 in the contra rotational direction about the rotational axis. By virtue of the ability to rotate in contra rotational directions, the level of the grid structure can be adjusted automatically with little or no manual intervention. The pinion 114 can be mounted on an extendible arm or post as shown in Figure 21 having an extended configuration to engage with the adjustable spacer 80, more specifically the first cam member 86, and a retracted configuration to disengage with the adjustable spacer 80. Various means to provide an extendible arm are applicable in the present invention. For example, the extendible arm can be a linear actuator to which is mounted the pinion. The linear actuator can be instructed to extend so as to engage the pinion with the adjustable spacer and retract to disengage the pinion from the adjustable spacer. Various other means to engage adjustable spacer, more specifically the first cam member, are applicable in the present invention. For example, the pinion can be configured to engage with the inner edge of the ring shaped first cam member instead of the outer periphery as shown in Figure 21. However, having the plurality of teeth around the outer periphery of the first cam member allows the pinion to easily engage with the plurality of teeth of the first cam member by a simple downward movement between the grid members as shown in Figures 21 and 22. Also shown in Figure 20 is a fixing bolt 124 that extends through the tracks 122a, 122b into the adjustable grid levelling mechanism 104 for clamping the first, second and intermediate cam members 86, 88, 90 together so as to prevent further rotation of the first, second and intermediate cam members relative to each other once adjustments have been made to the height of the adjustable spacer 80, i.e. the fixing bolt locks the first, second and intermediate cam members together. The fixing bolt comprises a head that is engageable with a tool, e.g. a screw driver. In the particular example shown in Figure 22, the head of the fixing bolt 124 comprises a slot for engaging with a blade type screw driver, but other shaped heads are permissible, e.g. a cross-head.

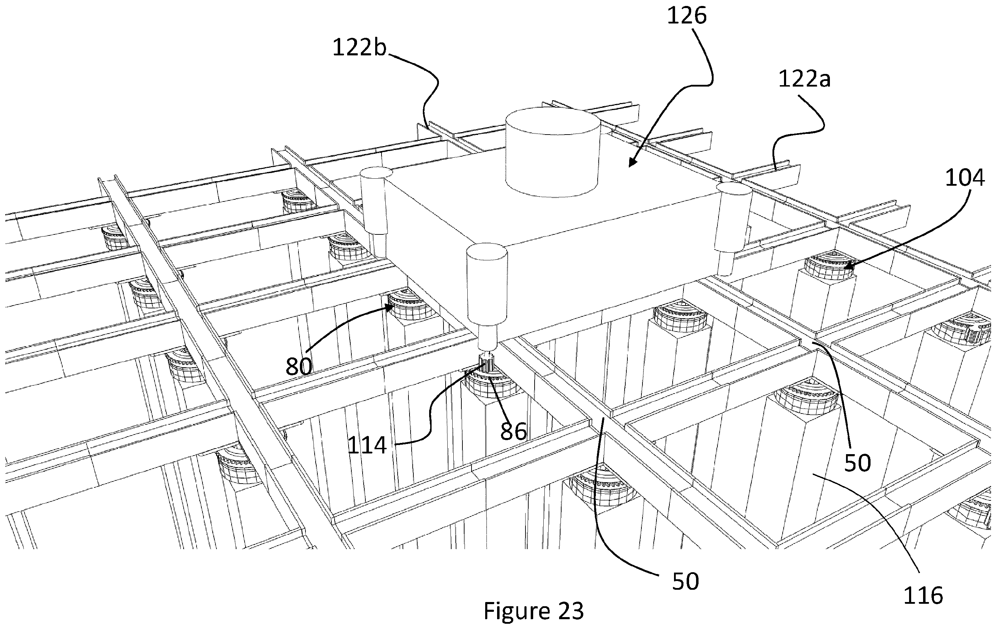

A robotic grid levelling device or bot 126 operable on the grid structure 140 comprising the extendable pinion 114 can be instructed to selectively engage with one or more adjustable spacers 80 at one or more nodes 50 of the grid structure 140. When adjustments are required to be made to at least a portion of the grid structure, the robotic grid levelling device 126 can be instructed to move to the at least portion of the uneven grid structure 140 and adjust the height of one or more adjustable spacers 80 at one or more nodes 50 of the grid structure 140 until the at least portion of the grid structure lies in a substantially horizontal plane and therefore is level with the rest of the grid structure. As the adjustable grid levelling mechanism 104 is interposed between the grid structure 140 and the vertical uprights 116 at the nodes or intersections of the grid structure, the extendable arm comprising the pinion for engaging with the first cam member of the adjustable spacer is shown in Figure 23 extending at one of the corners of the grid cell.

Various techniques can be used to identify areas of unevenness of the grid structure, all of which involve measuring the vertical position of a reference point on the robotic grid levelling device operable on the grid structure to one or more fixed reference points 128. For example, one or more total stations mounted to the one or more fixed reference points can be used to determine the coordinates, which includes the vertical position of the robotic grid levelling device on the grid structure. This includes measuring the angles the robotic grid levelling device makes to the one or more fixed reference points. The one more fixed reference points can be mounted to the grid structure and/or fixed reference points near the grid structure, e.g. building or ceiling or post.

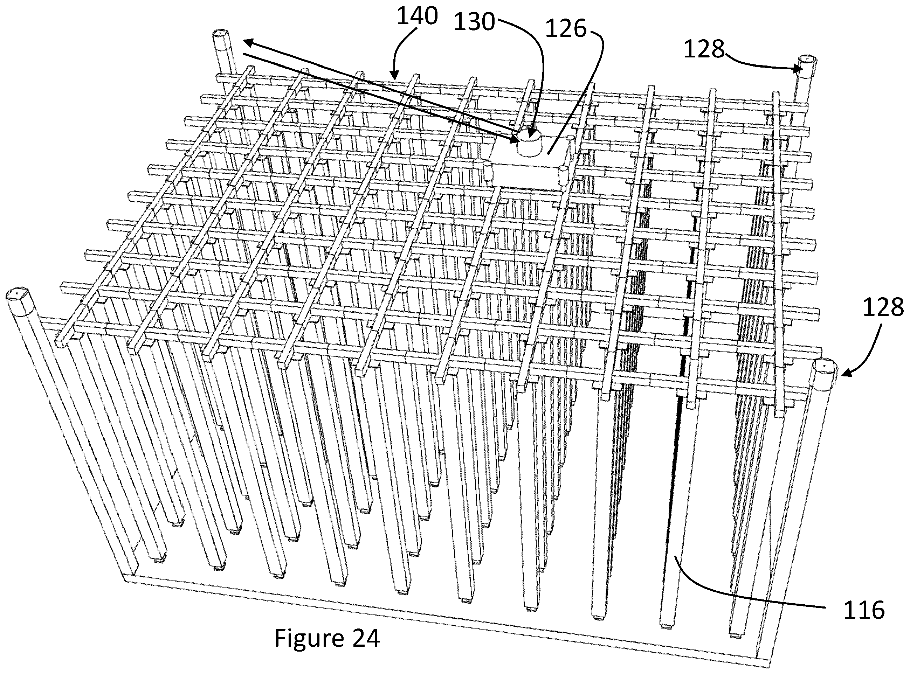

In one exemplary embodiment of the present invention shown in Figure 24, each of the one or more fixed reference points 128 on the grid structure 140 can comprise a light emitting unit for emitting at least one wavelength of light and a light receiving unit for receiving light reflected from the robotic grid levelling device operable on the grid structure. The light emitting unit is arranged with known position and orientation relative to the light receiving unit so as to provide triangulation based on the position of the robotic grid levelling device on the grid structure. The robotic grid levelling device 126 comprises a light reflecting unit 130, e.g. a prism, for reflecting light emitted by the light emitting unit. In operation, light emitted by the light emitting unit impinges the light reflecting unit 130 where it is reflected by the light reflecting unit towards the light receiving unit. The angle of deviation in the reflected light to the horizontal (herein defined "vertical angle") provides an indication of the vertical position of the robotic grid levelling device on the grid structure 140. The one or more fixed reference points 128 can comprise one or more robotic total stations for automatically measuring the angle of the light reflected from light reflecting unit 130 of the robotic grid levelling device 126 relative to a horizontal axis. The vertical angle provides an indication of the vertical position of the robotic grid levelling device 126 on the grid structure 140, and therefore the level of the grid structure 140 at the point of measurement. Light from the one or more robotic total stations can be instructed to illuminate the grid structure, in particular the light reflecting unit 130 of the robotic grid levelling device, at different positions on the grid structure, and thereby can trace the movement of the robotic grid levelling device on the grid structure. As the robotic grid levelling device moves on the grid structure, the total station at the one or more of the fixed reference points 128 measures the vertical angle and thus vertical position of the robotic grid levelling device at one or more given grid cells of the grid structure. This is repeated as the robotic grid levelling device moves across successive grid cells.

Data of the vertical position of the robotic grid levelling mechanism at different points on the grid structure is fed to a control system which determines whether the grid structure is level. The control system is configured to communicate with the one or more total stations at the fixed reference points 128 across a network. The one or more total stations can be wired to or wirelessly coupled to the network. The network may comprise a local area network (LAN), a wide area network (WAN) or any other type of network. The control system comprises one or more processors, a memory (e.g. read only memory and/or random access memory), and a communication bus. The memory can be any storage device commonly known in the art and can include but is not limited to a random-access memory (RAM), computer readable medium, magnetic storage medium, optical storage medium or other electronic storage medium which can be used to store data and accessed by the processor. One way of determining the level of the grid structure is by comparing the vertical position of the robotic grid levelling device at different points on the grid structure. Should there be a discrepancy between the vertical positions at the different points on the grid structure, the control system can instruct the robotic grid levelling device to adjust the level of the grid structure at the point of measurement by engaging the pinion 114 with the adjustable grid levelling mechanism 104 and making coarse and/or fine adjustments to the adjustable spacer 80 as discussed above until the vertical position of the robotic grid levelling device falls within a predetermined level. For the purpose of the present invention, the predetermined level can constitute the height of the grid structure relative to the ground. A feedback loop is thus established between the measurement data of the vertical position of the robotic grid levelling mechanism at different points on the grid structure from the one or more fixed reference points 128 and the control system. The ability to engage with the adjustable spacer at a grid level by lowering the pinion 114 to engage with the adjustable spacer 80, more specifically, the first cam member 86, and making coarse and/or fine adjustments to the height of the adjustable spacer allows the robotic grid levelling device to automatically make adjustments to the level of the grid structure.

Whilst the exemplary embodiment of the present invention describes one or more total stations at the one or more fixed reference points 128 and the light reflecting unit 130 being mounted to the robotic grid levelling device, the reverse is equally applicable where one or more total stations are mounted to the robotic grid levelling device and the one or more fixed reference points comprises the light reflecting device, e.g. prism, for reflecting the light transmitted from the one or more total stations. In this way, light is transmitted by the robotic grid levelling device operable on the grid structure where it is reflected from the light reflecting unit at the one or more fixed reference points. The angle of inclination the light makes with the horizontal provides an indication of the vertical position of the robot grid levelling device, and thus the level of the grid structure.

To provide an indication of the adjustments made to the length of the adjustable spacer, the first cam member 86 and/or the second cam member 88 and/or the intermediate cam member 90 can comprise one or more markers (not shown) that can be used to measure the relative angular position of any one of the first, second and intermediate cam members relative to each other. As the second cam member 88 is fixed, in one exemplary embodiment, the relative angular position of the first cam member 86 and/or the intermediate cam member 90 is measured relative to the second cam member 88 and provides an indication of the length or height of the adjustable spacer 80. For example, the angular position of the first cam member 86 relative to the second cam member 88 provides an indication of the degree of rotation of the first cam member 86 in the first rotation direction about the rotational axis, and thus the length of the adjustable spacer. Since the first cam member 86 provides rotation in the contra 'second' rotational direction, the angular position of either the first cam member 86 and/or intermediate cam member 90 relative to the second cam member 88 can provide an indication of the adjustment made to the length of the adjustable spacer when the intermediate cam member 90 rotates relative to the second cam member 88.

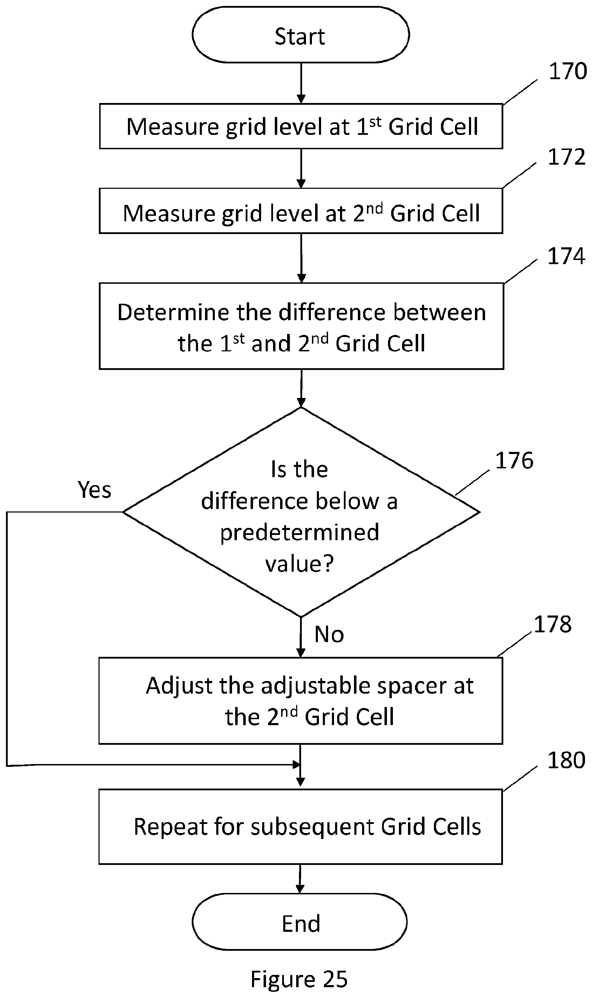

The process of measuring and adjusting the level of the grid structure can be better explained in an exemplary embodiment of the present invention shown in the flowchart in Figure 25. The robotic grid levelling device is instructed to move to a first grid cell and determine the coordinates of the robotic grid levelling device at the first grid cell by virtue of the total station discussed above which includes a measurement of the vertical position of the robotic grid levelling device at the first grid cell 170. Noting the vertical position of the robotic grid levelling device at the first cell, the robotic grid levelling device is instructed to move to a second grid cell and measure the vertical position of the robotic grid level device at the second grid cell 172. A control system in communication with the total stations records the coordinates of the robotic grid levelling device at the first and second grid cells, and determines the difference between the vertical positions of the robotic grid levelling device at the first and second grid cells 174. If the portion of the grid cell covering the first and second grid cells is uneven, then there will be a discrepancy between the measurements of the vertical position of the robotic grid levelling device at the first and second grid cells. The control system determines whether this discrepancy exceeds a predetermined value 176 and if so, the control system instructs the robotic grid levelling device to make adjustments to the adjustable spacer at the node of the second grid cell 178 until the measured coordinates of the robotic grid levelling device, in particular the vertical position, at the second grid cell are such that the discrepancy falls below the predetermined value. The whole process of measurement and adjustment of the grid level is repeated for the other grid cells 180.

In one example, the grid structure lies within a predetermined upper and lower value as measured from the vertical position of the robotic grid levelling device on the grid structure. The level of the grid structure is adjusted should the vertical position of the robotic grid levelling device fall outside of the predetermined upper and lower levels. In another example of the present invention, the level of the grid structure is set to a predetermined level or height and the measurements of the robotic grid levelling device is compared to this set level or height. Should there be a discrepancy, the robotic grid levelling device makes adjustments to one or more adjustable spacers at one or more nodes so that the level or height of the grid structure is at the predetermined level or height or within an upper and lower limit to the predetermined level.

Ideally, the second grid cell is adjacent to the first grid cell. This has the advantage of making adjustments to the grid structure at successive nodes of the grid structure as the robotic grid levelling device moves across the grid structure. Adjustments to the level of the grid structure can be made as the grid members of the grid structure are being assembled on the vertical uprights. Alternatively, measurements and adjustments to the grid level can be made once the grid frame structure has been assembled.

The adjustable grid levelling mechanism comprising the adjustable spacer at the top of the vertical uprights can be used in conjunction with a second adjustable grid levelling mechanism at the foot of the vertical uprights. For example, initial adjustments to the level or height of the grid structure can be made at the base or foot of the vertical uprights and final adjustments to the grid level can subsequently be made to ensure that the grid structure lies in a substantially horizontal plane. The measurement and/or adjustments to the level of the grid structure can also be made at intervals to ensure that the grid structure is substantially level. Thermal expansion of the different components of the grid framework structure such as the vertical uprights and/or the grid members may cause the grid structure to distort resulting in unevenness of the grid structure. By periodically measuring the level of the grid structure by the robotic grid levelling device, adjustments to the level of the grid structure can be made where necessary to ensure that the grid structure falls within a predetermined level.

Whilst a particular embodiment of the present invention has been disclosed, it is understood that the present invention as defined in the claims is not limited to the specific embodiment disclosed and then many modifications and other embodiments are intended to be included within the scope of the appended claims. It is further envisioned that features of one embodiment may be combined or used with the features from a different embodiment. For example, the adjustable spacer is not just limited to two indexing mechanisms, each indexing mechanism providing a different adjustment to the length of the adjustable spacer, and can comprise any number of indexing mechanisms larger than two.

Moreover, each indexing mechanism can provide different adjustments to the length of the adjustable spacer for a given angular rotation about a coaxial rotational axis.

## Claims

1. An adjustable spacer (80) for adjusting the spacing between two bodies comprising:
i) a first cam member (86) rotatable about a rotational axis, the first cam member (86) having a first mating face (92);
ii) a second cam member (88) rotatable about the rotational axis, the second cam member having a second mating face (94);
iii) an intermediate cam member (90) interposed between the first cam member (86) and the second cam member (88), the intermediate cam member (90) being rotatable about the rotational axis and having a first intermediate mating face (96) for engaging with the first mating face (92) to provide a first rotatable indexing mechanism (82), and a second intermediate mating face (98) for engaging with the second mating face (94) to provide a second rotatable indexing mechanism (84);
**characterised in that** the first and second rotatable indexing mechanisms (82, 84) are configured to provide incremental adjustments of the length of the adjustable spacer (80) such that rotation of the first rotatable indexing mechanism (82) by a given angular rotation in a first rotational direction about the rotational axis changes the length of the adjustable spacer (80) along the rotational axis by a first length, and rotation of the second rotatable indexing mechanism (84) in a second direction by the same given angular rotation about the rotational axis changes the length of the adjustable spacer (80) along the rotational axis by a second length, the second rotational direction being opposite the first rotational direction, the second length being different to the first length.

2. The adjustable spacer (80) of claim 1, wherein the first length is less than the second length.

3. The adjustable spacer of any of the preceding claims, wherein the profile or contour of each of the first intermediate mating face (96) and the first mating face (92) is configured so as to prevent the first cam member (86) rotating relative to the intermediate cam member (90) in the second rotational direction, and the profile or contour of each of the second intermediate mating face (98) and the second mating face (94) is configured so as to prevent the intermediate cam member (90) rotating relative to the second cam member (88) in the first rotational direction.

4. The adjustable spacer (80) of any of the claims 1 to 3, wherein each of the first intermediate mating face (96) and the first mating face (92) comprises a plurality of teeth (99) to provide the first rotatable indexing mechanism (82), and each of the second intermediate mating face (98) and the second mating face (94) comprises a plurality of teeth (100) to provide the second rotatable indexing mechanism (84).

5. The adjustable spacer (80) of any of the preceding claims, wherein the mating face of each of the first intermediate mating face (96) and the first mating face (92) comprises at least one first type ramp (101, 102), said at least one first type ramp (101, 102) being inclined such that rotation of the first cam member (86) by the given angular rotation relative to the intermediate cam member (90) in the first rotational direction changes the length of the adjustable spacer (80) along the rotational axis by the first length;
and the mating face of each of the second intermediate mating face (98) and the second mating face (94) comprises at least one second type ramp (101, 102), said at least one second type ramp being inclined such that rotation of the intermediate cam member (90) by the given angular rotation relative to the second cam member (88) in the second rotational direction changes the length of the adjustable spacer (80) along the rotational axis by the second length; and optionally, wherein the at least one first type ramp (102) is shallower than the at least one second type ramp (101) such that the first rotatable indexing mechanism is configured to provide a fine level of adjustment of the length of the adjustable spacer and the second rotatable indexing mechanism is configured to provide a coarse level of adjustment of the length of the adjustable spacer.

6. The adjustable spacer (80) of any of the preceding claims, wherein the first and second intermediate mating faces (96, 98) cooperate with the first and second mating faces (92, 94) respectively such that rotation of the first cam member (86) in the second rotational direction rotates the intermediate cam member (90) relative to the second cam member (88) in the second rotational direction; and optionally, the first cam member (86) comprises a plurality of teeth (112) extending externally around the periphery of the first cam member (86) for engaging with a pinion (114).

7. The adjustable spacer (80) of any of the preceding claims, wherein each of the first cam member (86) and the intermediate cam member (90) is ring shaped.

8. An adjustable grid levelling mechanism (104) for adjusting the level of a grid structure (140, 150) of a grid framework structure comprising a plurality of vertical uprights (116), the plurality of vertical uprights (116) supporting the grid structure (140, 150), the adjustable grid levelling mechanism (104) comprising a base (106) for mounting to the top or upper end of a vertical upright (116), a mounting head (108) for a grid structure (140, 150) to be mounted thereon, and an extendible section interposed between the base and the mounting head such that the mounting head is moveable relative to the base, wherein said extendible section comprises an adjustable spacer (104) as defined in any of the claims 1 to

9. A grid framework structure configured to support one or more load handling devices (30) thereupon, said grid framework structure comprising:
i) a grid structure (140) comprising a first set of grid members (116, 122a) extending in a first direction and a second set of grid members (118, 122b) extending in a second direction, the second set of grid members running transversely to the first set of grid members in a substantially horizontal plane and in a grid pattern comprising a plurality of grid cells;
ii) a plurality of vertical uprights (116) for supporting the grid structure (140, 150); the plurality of vertical uprights (116) are interconnected at their upper ends by the first set of grid members and the second set of grid members;
iii) an adjustable grid levelling mechanism (104) as defined in claim 8 interposed between the at least one of the plurality of vertical uprights (116) and the grid structure (140) at one or more of the interconnections of the plurality of vertical uprights (116), wherein the adjustable spacer (80) is configured for adjusting a vertical distance between the at least one of the plurality of vertical uprights (116) and the grid structure (140, 150).

10. The grid framework structure of claim 9, where the plurality of vertical uprights (116) are arranged to form a plurality of vertical storage locations for one or more containers (10) to be stacked between the vertical uprights (116) and be guided by the vertical uprights in a vertical direction.

11. The grid framework structure of claim 9 or 10, wherein the grid structure (140, 150) is mounted to the adjustable grid levelling mechanism (104) at one or more of the interconnections (50) of the plurality of vertical uprights.

12. A robotic grid levelling device (126) for moving on the grid structure as defined in any of the claims 9 to 11, comprising:
A) a wheel assembly comprising:
i) a first set of wheels for moving the robotic levelling device in the first direction;
ii) a second set of wheels for moving the robotic levelling device in the second direction;
B) a drive mechanism for selectively driving the first and/or the second set of wheels;
**characterised in that** the robotic grid levelling device further comprises:-
C) an adjustment tool (114) configured for rotating the first and/or second rotatable indexing mechanisms (86) about their respective first and second rotational directions.

13. A method of levelling a grid structure of a grid framework structure of any of the claims 9 to 11, the method comprising the steps of:
i) measuring (170) a first vertical position of a robotic grid levelling device (126) of claim 13 at a first grid cell of the grid structure (140, 150) relative to one or more fixed reference points;
ii) moving the robotic levelling device (126) on the grid structure to a second grid cell on the grid structure;
iii) measuring (172) a second vertical position of the robotic levelling device on the grid structure at the second grid cell relative to the one or more fixed reference points;
iv) calculating (174) the difference between the second vertical position and the first vertical position;
whereby:
v) if the calculated difference (176) is greater than a predetermined value, adjusting (178) the length of the adjustable spacer by engaging the adjustable tool with the adjustable spacer so as to rotate the first and/or second rotatable indexing mechanisms in their respective first and/or second rotational directions about the rotational axis until the calculated difference is less than the predetermined value;
vi) repeating steps (i) to (v) until the grid structure lies in a substantial horizontal plane.

14. The method of claim 13, wherein the first and second vertical positions of the robotic levelling device are measured by one or more total stations (128) at the one or more of the fixed reference points, each of said one or more total stations comprising a transmitter device (130) for illuminating the robotic grid levelling device with light of at least one wavelength and a receiver device for receiving the light reflected from the robotic grid levelling device.

15. A grid levelling system comprising:
i) a grid framework structure of any of the clams 9 to 11;
ii) a robotic grid levelling device of claim 12 operative on the grid structure of the grid framework structure;
iii) a control system comprising one or more processors and memory storing instructions that when executed by the one or more processor cause the one or more processors to:
a) measure a first vertical position of the robotic levelling device on the grid structure at a first grid cell on the grid structure relative to one or more fixed reference points on the grid structure;
b) move the robotic levelling device to a second grid cell on the grid structure;
c) measure a second vertical position of the robotic levelling device at the second grid cell on the grid structure relative to the one or more fixed reference points on the grid structure;
d) calculate the difference between the second vertical position and the first vertical position;
e) if the calculated difference is greater than a predetermined value, adjust the length of the adjustable spacer by engaging the adjustable tool with the adjustable spacer so as to rotate the first and/or second rotatable indexing mechanisms in their respective first and second rotational directions about the rotational axis until the calculated difference is less than the predetermined value.

## Patentansprüche

1. Einstellbarer Abstandshalter (80) zum Einstellen des Abstands zwischen zwei Körpern, umfassend:
i) ein erstes Nockenelement (86), das um eine Drehachse drehbar ist, wobei das erste Nockenelement (86) eine erste Passfläche (92) aufweist;
ii) ein zweites Nockenelement (88), das um die Drehachse drehbar ist, wobei das zweite Nockenelement eine zweite Passfläche (94) aufweist;
iii) ein Zwischennockenelement (90), das zwischen dem ersten Nockenelement (86) und dem zweiten Nockenelement (88) angeordnet ist, wobei das Zwischennockenelement (90) um die Drehachse drehbar ist und eine erste Zwischenpassfläche (96) zum Eingriff mit der ersten Passfläche (92), um einen ersten drehbaren Indexierungsmechanismus (82) bereitzustellen, und eine zweite Zwischenpassfläche (98) zum Eingriff mit der zweiten Passfläche (94) aufweist, um einen zweiten drehbaren Indexierungsmechanismus (84) bereitzustellen;
**dadurch gekennzeichnet, dass** der erste und der zweite drehbare Indexierungsmechanismus (82, 84) konfiguriert sind, um inkrementelle Einstellungen der Länge des einstellbaren Abstandshalters (80) bereitzustellen, so dass die Drehung des ersten drehbaren Indexierungsmechanismus (82) um eine gegebene Winkeldrehung in einer ersten Drehrichtung um die Drehachse die Länge des einstellbaren Abstandshalters (80) entlang der Drehachse um eine erste Länge ändert, und die Drehung des zweiten drehbaren Indexierungsmechanismus (84) in einer zweiten Richtung um dieselbe gegebene Winkeldrehung um die Drehachse die Länge des einstellbaren Abstandshalters (80) entlang der Drehachse um eine zweite Länge ändert, wobei die zweite Drehrichtung der ersten Drehrichtung entgegengesetzt ist und wobei die zweite Länge von der ersten Länge verschieden ist.

2. Einstellbarer Abstandshalter (80) nach Anspruch 1, wobei die erste Länge kleiner als die zweite Länge ist.

3. Einstellbarer Abstandshalter nach einem der vorhergehenden Ansprüche, wobei das Profil oder die Kontur von jeder der ersten Zwischenpassfläche (96) und der ersten Passfläche (92) konfiguriert ist, um zu verhindern, dass sich das erste Nockenelement (86) relativ zu dem Zwischennockenelement (90) in der zweiten Drehrichtung dreht, und das Profil oder die Kontur von jeder der zweiten Zwischenpassfläche (98) und der zweiten Passfläche (94) konfiguriert ist, um zu verhindern, dass sich das Zwischennockenelement (90) relativ zu dem zweiten Nockenelement (88) in der ersten Drehrichtung dreht.

4. Einstellbarer Abstandshalter (80) nach einem der Ansprüche 1 bis 3, wobei jede der ersten Zwischenpassfläche (96) und der ersten Passfläche (92) eine Vielzahl von Zähnen (99) umfasst, um den ersten drehbaren Indexierungsmechanismus (82) bereitzustellen, und jede der zweiten Zwischenpassfläche (98) und der zweiten Passfläche (94) eine Vielzahl von Zähnen (100) umfasst, um den zweiten drehbaren Indexierungsmechanismus (84) bereitzustellen.

5. Einstellbarer Abstandshalter (80) nach einem der vorhergehenden Ansprüche, wobei die Passfläche von jeder der ersten Zwischenpassfläche (96) und der ersten Passfläche (92) mindestens eine Rampe (101, 102) vom ersten Typ umfasst, wobei die mindestens eine Rampe (101, 102) vom ersten Typ so geneigt ist, dass die Drehung des ersten Nockenelements (86) um die gegebene Winkeldrehung relativ zu dem Zwischennockenelement (90) in der ersten Drehrichtung die Länge des einstellbaren Abstandshalters (80) entlang der Drehachse um die erste Länge ändert;
und die Passfläche von jeder der zweiten Zwischenpassfläche (98) und der zweiten Passfläche (94) mindestens eine Rampe (101, 102) vom zweiten Typ umfasst, wobei die mindestens eine Rampe vom zweiten Typ so geneigt ist, dass die Drehung des Zwischennockenelements (90) um die gegebene Winkeldrehung relativ zu dem zweiten Nockenelement (88) in der zweiten Drehrichtung die Länge des einstellbaren Abstandshalters (80) entlang der Drehachse um die zweite Länge ändert;
und wobei optional die mindestens eine Rampe (102) vom ersten Typ flacher als die mindestens eine Rampe (101) vom zweiten Typ ist, so dass der erste drehbare Indexierungsmechanismus konfiguriert ist, um ein feines Maß der Einstellung der Länge des einstellbaren Abstandshalters bereitzustellen, und der zweite drehbare Indexierungsmechanismus konfiguriert ist, um ein grobes Maß der Einstellung der Länge des einstellbaren Abstandshalters bereitzustellen.

6. Einstellbarer Abstandshalter (80) nach einem der vorhergehenden Ansprüche, wobei die erste und die zweite Zwischenpassfläche (96, 98) mit der ersten bzw. der zweiten Passfläche (92, 94) zusammenwirken, so dass die Drehung des ersten Nockenelements (86) in der zweiten Drehrichtung das Zwischennockenelement (90) relativ zu dem zweiten Nockenelement (88) in der zweiten Drehrichtung dreht; und optional das erste Nockenelement (86) eine Vielzahl von Zähnen (112) umfasst, die sich außen um den Umfang des ersten Nockenelements (86) zum Eingriff mit einem Ritzel (114) erstrecken.

7. Einstellbarer Abstandshalter (80) nach einem der vorhergehenden Ansprüche, wobei jedes des ersten Nockenelements (86) und des Zwischennockenelements (90) ringförmig ist.

8. Einstellbarer Gitternivellierungsmechanismus (104) zum Einstellen des Niveaus einer Gitterstruktur (140, 150) einer Gitterrahmenstruktur, umfassend eine Vielzahl von vertikalen Pfosten (116), wobei die Vielzahl von vertikalen Pfosten (116) die Gitterstruktur (140, 150) stützt, wobei der einstellbare Gitternivellierungsmechanismus (104) eine Basis (106) zum Montieren an dem obenliegenden oder oberen Ende eines vertikalen Pfostens (116), einen Montagekopf (108) für eine darauf zu montierende Gitterstruktur (140, 150) und einen ausziehbaren Abschnitt umfasst, der zwischen der Basis und dem Montagekopf angeordnet ist, so dass der Montagekopf relativ zu der Basis beweglich ist, wobei der ausziehbare Abschnitt einen einstellbaren Abstandshalter (104) nach einem der Ansprüche 1 bis 7 umfasst.

9. Gitterrahmenstruktur, die konfiguriert ist, um eine oder mehrere Lasthandhabungsvorrichtungen (30) darauf zu stützen, wobei die Gitterrahmenstruktur Folgendes umfasst:
i) eine Gitterstruktur (140), umfassend einen ersten Satz von Gitterelementen (116, 122a), die sich in einer ersten Richtung erstrecken, und einen zweiten Satz von Gitterelementen (118, 122b), die sich in einer zweiten Richtung erstrecken, wobei der zweite Satz von Gitterelementen quer zu dem ersten Satz von Gitterelementen in einer im Wesentlichen horizontalen Ebene und in einem Gittermuster verläuft, das eine Vielzahl von Gitterzellen umfasst;
ii) eine Vielzahl von vertikalen Pfosten (116) zum Stützen der Gitterstruktur (140, 150); wobei die Vielzahl von vertikalen Pfosten (116) an ihren oberen Enden durch den ersten Satz von Gitterelementen und den zweiten Satz von Gitterelementen miteinander verbunden sind;
iii) einen einstellbaren Gitternivellierungsmechanismus (104) nach Anspruch 8, der zwischen dem mindestens einen der Vielzahl von vertikalen Pfosten (116) und der Gitterstruktur (140) an einer oder mehreren der Verbindungen der Vielzahl von vertikalen Pfosten (116) angeordnet ist, wobei der einstellbare Abstandshalter (80) zum Einstellen einer vertikalen Distanz zwischen dem mindestens einen der Vielzahl von vertikalen Pfosten (116) und der Gitterstruktur (140, 150) konfiguriert ist.

10. Gitterrahmenstruktur nach Anspruch 9, wobei die Vielzahl von vertikalen Pfosten (116) angeordnet ist, um eine Vielzahl von vertikalen Lagerstellen für einen oder mehrere Behälter (10) zu bilden, die zwischen den vertikalen Pfosten (116) gestapelt und durch die vertikalen Pfosten in einer vertikalen Richtung geführt werden.

11. Gitterrahmenstruktur nach einem der Ansprüche 9 oder 10, wobei die Gitterstruktur (140, 150) an dem einstellbaren Gitternivellierungsmechanismus (104) an einer oder mehreren der Verbindungen (50) der Vielzahl von vertikalen Pfosten montiert ist.

12. Roboter-Gitternivellierungsvorrichtung (126) zum Bewegen auf der Gitterstruktur nach einem der Ansprüche 9 bis 11, umfassend:
A) eine Radanordnung, umfassend:
i) einen ersten Satz von Rädern zum Bewegen der Roboter-Nivellierungsvorrichtung in der ersten Richtung;
ii) einen zweiten Satz von Rädern zum Bewegen der Roboter-Nivellierungsvorrichtung in der zweiten Richtung;
B) einen Antriebsmechanismus zum selektiven Antreiben des ersten und/oder des zweiten Satzes von Rädern;
**dadurch gekennzeichnet, dass** die Roboter-Gitternivellierungsvorrichtung ferner Folgendes umfasst:
C) ein Einstellwerkzeug (114), das zum Drehen des ersten und/oder des zweiten drehbaren Indexierungsmechanismus (86) um ihre jeweilige erste und zweite Drehrichtung konfiguriert ist.

13. Verfahren zum Nivellieren einer Gitterstruktur einer Gitterrahmenstruktur nach einem der Ansprüche 9 bis 11, wobei das Verfahren die folgenden Schritte umfasst:
i) Messen (170) einer ersten vertikalen Position einer Roboter-Gitternivellierungsvorrichtung (126) nach Anspruch 13 an einer ersten Gitterzelle der Gitterstruktur (140, 150) relativ zu einem oder mehreren festen Bezugspunkten;
ii) Bewegen der Roboter-Nivellierungsvorrichtung (126) auf der Gitterstruktur zu einer zweiten Gitterzelle auf der Gitterstruktur;
iii) Messen (172) einer zweiten vertikalen Position der Roboter-Nivellierungsvorrichtung auf der Gitterstruktur an der zweiten Gitterzelle relativ zu dem einen oder den mehreren festen Bezugspunkten;
iv) Berechnen (174) der Differenz zwischen der zweiten vertikalen Position und der ersten vertikalen Position;
wobei:
v) wenn die berechnete Differenz (176) größer als ein vorbestimmter Wert ist, Einstellen (178) der Länge des einstellbaren Abstandshalters durch Eingriff des einstellbaren Werkzeugs mit dem einstellbaren Abstandshalter, um den ersten und/oder den zweiten drehbaren Indexierungsmechanismus in ihre jeweilige erste und/oder zweite Drehrichtung um die Drehachse zu drehen, bis die berechnete Differenz kleiner als der vorbestimmte Wert ist;
vi) Wiederholen der Schritte (i) bis (v), bis die Gitterstruktur in einer im Wesentlichen horizontalen Ebene liegt.

14. Verfahren nach Anspruch 13, wobei die erste und die zweite vertikale Position der Roboter-Nivellierungsvorrichtung durch eine oder mehrere Totalstationen (128) an dem einen oder den mehreren der festen Bezugspunkte gemessen werden, wobei jede der einen oder der mehreren Totalstationen eine Sendervorrichtung (130) zum Beleuchten der Roboter-Gitternivellierungsvorrichtung mit Licht von mindestens einer Wellenlänge und eine Empfängervorrichtung zum Empfangen des von der Roboter-Gitternivellierungsvorrichtung reflektierten Lichts umfasst.

15. Gitternivellierungssystem, umfassend:
i) eine Gitterrahmenstruktur nach einem der Ansprüche 9 bis 11;
ii) eine Roboter-Gitternivellierungsvorrichtung nach Anspruch 12, die auf der Gitterstruktur der Gitterrahmenstruktur betrieben werden kann;
iii) ein Steuersystem, umfassend einen oder mehrere Prozessoren und einen Speicher, der Anweisungen speichert, die bei Ausführung durch den einen oder die mehreren Prozessoren den einen oder die mehreren Prozessoren zu Folgendem veranlassen:
a) Messen einer ersten vertikalen Position der Roboter-Nivellierungsvorrichtung auf der Gitterstruktur an einer ersten Gitterzelle auf der Gitterstruktur relativ zu einem oder mehreren festen Bezugspunkten auf der Gitterstruktur;
b) Bewegen der Roboter-Nivellierungsvorrichtung zu einer zweiten Gitterzelle auf der Gitterstruktur;
c) Messen einer zweiten vertikalen Position der Roboter-Nivellierungsvorrichtung an der zweiten Gitterzelle auf der Gitterstruktur relativ zu dem einen oder den mehreren festen Bezugspunkten auf der Gitterstruktur;
d) Berechnen der Differenz zwischen der zweiten vertikalen Position und der ersten vertikalen Position;
e) wenn die berechnete Differenz größer als ein vorbestimmter Wert ist, Einstellen der Länge des einstellbaren Abstandshalters durch Eingriff des einstellbaren Werkzeugs mit dem einstellbaren Abstandshalter, um den ersten und/oder den zweiten drehbaren Indexierungsmechanismus in ihre jeweilige erste und zweite Drehrichtung um die Drehachse zu drehen, bis die berechnete Differenz kleiner als der vorbestimmte Wert ist.

## Revendications

1. Entretoise ajustable (80) pour ajuster l'espacement entre deux corps, comprenant :
i) un premier élément de came (86) pouvant tourner autour d'un axe de rotation, le premier élément de came (86) présentant une première face d'appariement (92) ;
ii) un second élément de came (88) pouvant tourner autour de l'axe de rotation, le second élément de came présentant une seconde face d'appariement (94) ;
iii) un élément de came intermédiaire (90) interposé entre le premier élément de came (86) et le second élément de came (88), l'élément de came intermédiaire (90) pouvant tourner autour de l'axe de rotation et présentant une première face d'appariement intermédiaire (96) pour une mise en prise avec la première face d'appariement (92) afin de fournir un premier mécanisme d'indexage rotatif (82), et une seconde face d'appariement intermédiaire (98) pour une mise en prise avec la seconde face d'appariement (94) afin de fournir un second mécanisme d'indexage rotatif (84) ;
**caractérisé en ce que** les premier et second mécanismes d'indexage rotatifs (82, 84) sont configurés pour fournir des ajustements incrémentiels de la longueur de l'entretoise ajustable (80) de telle sorte qu'une rotation du premier mécanisme d'indexage rotatif (82) par une rotation angulaire donnée dans une première direction de rotation autour de l'axe de rotation modifie la longueur de l'entretoise ajustable (80) le long de l'axe de rotation d'une première longueur, et une rotation du second mécanisme d'indexage rotatif (84) dans une seconde direction par la même rotation angulaire donnée autour de l'axe de rotation modifie la longueur de l'entretoise ajustable (80) le long de l'axe de rotation d'une seconde longueur, la seconde direction de rotation étant opposée à la première direction de rotation, la seconde longueur étant différente de la première longueur.

2. Entretoise ajustable (80) selon la revendication 1, dans laquelle la première longueur est inférieure à la seconde longueur.

3. Entretoise ajustable selon l'une quelconque des revendications précédentes, dans laquelle le profil ou le contour de chacune de la première face d'appariement intermédiaire (96) et de la première face d'appariement (92) est configuré de manière à empêcher le premier élément de came (86) de tourner par rapport à l'élément de came intermédiaire (90) dans la seconde direction de rotation, et le profil ou le contour de chacune de la seconde face d'appariement intermédiaire (98) et de la seconde face d'appariement (94) est configuré de manière à empêcher l'élément de came intermédiaire (90) de tourner par rapport au second élément de came (88) dans la première direction de rotation.

4. Entretoise ajustable (80) selon l'une quelconque des revendications 1 à 3, dans laquelle chacune de la première face d'appariement intermédiaire (96) et de la première face d'appariement (92) comprend une pluralité de dents (99) pour fournir le premier mécanisme d'indexage rotatif (82), et chacune de la seconde face d'appariement intermédiaire (98) et de la seconde face d'appariement (94) comprend une pluralité de dents (100) pour fournir le second mécanisme d'indexage rotatif (84).

5. Entretoise ajustable (80) selon l'une quelconque des revendications précédentes, dans laquelle la face d'appariement de chacune de la première face d'appariement intermédiaire (96) et de la première face d'appariement (92) comprend au moins une rampe de premier type (101, 102), ladite au moins une rampe de premier type (101, 102) étant inclinée de telle sorte qu'une rotation du premier élément de came (86) par la rotation angulaire donnée par rapport à l'élément de came intermédiaire (90) dans la première direction de rotation change la longueur de l'entretoise ajustable (80) le long de l'axe de rotation de la première longueur ;
et la face d'appariement de chacune de la seconde face d'appariement intermédiaire (98) et de la seconde face d'appariement (94) comprend au moins une rampe de second type (101, 102), ladite au moins une rampe de second type étant inclinée de telle sorte qu'une rotation de l'élément de came intermédiaire (90) par la rotation angulaire donnée par rapport au second élément de came (88) dans la seconde direction de rotation change la longueur de l'entretoise ajustable (80) le long de l'axe de rotation de la seconde longueur ; et facultativement, dans laquelle la au moins une rampe de premier type (102) est moins profonde que la au moins une rampe de second type (101) de telle sorte que le premier mécanisme d'indexage rotatif est configuré pour fournir un niveau fin d'ajustement de la longueur de l'entretoise ajustable et le second mécanisme d'indexage rotatif est configuré pour fournir un niveau grossier d'ajustement de la longueur de l'entretoise ajustable.

6. Entretoise ajustable (80) selon l'une quelconque des revendications précédentes, dans laquelle les première et seconde faces d'appariement intermédiaires (96, 98) coopèrent avec les première et seconde faces d'appariement (92, 94), respectivement, de sorte que la rotation du premier élément de came (86) dans la seconde direction de rotation fait tourner l'élément de came intermédiaire (90) par rapport au second élément de came (88) dans la seconde direction de rotation ; et facultativement le premier élément de came (86) comprend une pluralité de dents (112) s'étendant à l'extérieur autour de la périphérie du premier élément de came (86) pour venir en prise avec un pignon (114).

7. Entretoise ajustable (80) selon l'une quelconque des revendications précédentes, dans laquelle chacun du premier élément de came (86) et de l'élément de came intermédiaire (90) est en forme d'anneau.

8. Mécanisme de nivellement de grille ajustable (104) pour ajuster le niveau d'une structure de grille (140, 150) d'une structure d'ossature de grille comprenant une pluralité de montants verticaux (116), la pluralité de montants verticaux (116) supportant la structure de grille (140, 150), le mécanisme de nivellement de grille ajustable (104) comprenant une base (106) pour un montage sur l'extrémité haute ou supérieure d'un montant vertical (116), une tête de montage (108) pour une structure de grille (140, 150) à monter sur celle-ci, et une section extensible interposée entre la base et la tête de montage de telle sorte que la tête de montage soit mobile par rapport à la base, dans laquelle ladite section extensible comprend une entretoise ajustable (104) selon l'une quelconque des revendications 1 à 7.

9. Structure d'ossature de grille configurée pour supporter un ou plusieurs dispositifs de manipulation de charge (30) sur celle-ci, ladite structure d'ossature de grille comprenant :
i) une structure de grille (140) comprenant un premier ensemble d'éléments de grille (116, 122a) s'étendant dans une première direction et un second ensemble d'éléments de grille (118, 122b) s'étendant dans une seconde direction, le second ensemble d'éléments de grille s'étendant transversalement par rapport au premier ensemble d'éléments de grille dans un plan sensiblement horizontal et selon un motif de grille comprenant une pluralité de cellules de grille ;
ii) une pluralité de montants verticaux (116) pour supporter la structure de grille (140, 150) ; la pluralité de montants verticaux (116) sont interconnectés au niveau de leurs extrémités supérieures par le premier ensemble d'éléments de grille et le second ensemble d'éléments de grille ;
iii) un mécanisme de nivellement de grille ajustable (104) selon la revendication 8, interposé entre le au moins un de la pluralité de montants verticaux (116) et la structure de grille (140) au niveau d'une ou de plusieurs des interconnexions de la pluralité de montants verticaux (116), dans laquelle l'entretoise ajustable (80) est configurée pour ajuster une distance verticale entre le au moins un de la pluralité de montants verticaux (116) et la structure de grille (140, 150).

10. Structure d'ossature de grille selon la revendication 9, dans laquelle la pluralité de montants verticaux (116) sont agencés pour former une pluralité d'emplacements de stockage verticaux pour un ou plusieurs contenants (10) devant être empilés entre les montants verticaux (116) et devant être guidés par les montants verticaux dans une direction verticale.

11. Structure d'ossature de grille selon la revendication 9 ou 10, dans laquelle la structure de grille (140, 150) est montée sur le mécanisme de nivellement de grille ajustable (104) au niveau d'une ou plusieurs des interconnexions (50) de la pluralité de montants verticaux.

12. Dispositif de nivellement de grille robotisé (126) destiné à se déplacer sur la structure de grille selon l'une quelconque des revendications 9 à 11, comprenant :
A) un ensemble de roues comprenant :
i) un premier ensemble de roues pour déplacer le dispositif de nivellement robotisé dans la première direction ;
ii) un second ensemble de roues pour déplacer le dispositif de nivellement robotisé dans la seconde direction ;
B) un mécanisme d'entraînement pour entraîner sélectivement le premier et/ou le second ensemble de roues ; **caractérisé en ce que** le dispositif de nivellement de grille robotisé comprend en outre :
C) un outil d'ajustement (114) configuré pour faire tourner les premier et/ou second mécanismes d'indexage rotatifs (86) autour de leurs première et seconde direction de rotation respectives.

13. Procédé de nivellement d'une structure de grille d'une structure d'ossature de grille selon l'une quelconque des revendications 9 à 11, le procédé comprenant les étapes consistant à :
i) mesurer (170) une première position verticale d'un dispositif de nivellement de grille robotisé (126) selon la revendication 13 au niveau d'une première cellule de grille de la structure de grille (140, 150) par rapport à un ou plusieurs points de référence fixes ;
ii) déplacer le dispositif de nivellement robotisé (126) sur la structure de grille vers une seconde cellule de grille sur la structure de grille ;
iii) mesurer (172) une seconde position verticale du dispositif de nivellement robotisé sur la structure de grille au niveau de la seconde cellule de grille par rapport aux un ou plusieurs points de référence fixes ;
iv) calculer (174) la différence entre la seconde position verticale et la première position verticale ; dans lequel :
v) si la différence calculée (176) est supérieure à une valeur prédéterminée, ajuster (178) la longueur de l'entretoise ajustable en mettant en prise l'outil ajustable avec l'entretoise ajustable de manière à faire tourner les premier et/ou second mécanismes d'indexage rotatifs dans leurs première et/ou seconde direction de rotation respectives autour de l'axe de rotation jusqu'à ce que la différence calculée soit inférieure à la valeur prédéterminée ;
vi) répéter les étapes (i) à (v) jusqu'à ce que la structure de grille se trouve dans un plan horizontal substantiel.

14. Procédé selon la revendication 13, dans lequel les première et seconde positions verticales du dispositif de nivellement robotisé sont mesurées par une ou plusieurs stations totales (128) au niveau d'un ou plusieurs des points de référence fixes, chacune desdites une ou plusieurs stations totales comprenant un dispositif émetteur (130) pour éclairer le dispositif de nivellement de grille robotisé avec une lumière d'au moins une longueur d'onde et un dispositif récepteur pour recevoir la lumière réfléchie par le dispositif de nivellement de grille robotisé.

15. Système de nivellement de grille, comprenant :
I) une structure d'ossature de grille (14) selon l'une quelconque des revendications 9 à 11 ;
ii) un dispositif de nivellement de grille robotisé selon la revendication 12, opérationnel sur la structure de grille de la structure d'ossature de grille ;
iii) un système de commande comprenant un ou plusieurs processeurs et une mémoire stockant des instructions qui, lorsqu'elles sont exécutées par les un ou plusieurs processeurs, amènent les un ou plusieurs processeurs à :
a) mesurer une première position verticale du dispositif de nivellement robotisé sur la structure de grille au niveau d'une première cellule de grille sur la structure de grille par rapport à un ou plusieurs points de référence fixes sur la structure de grille ;
b) déplacer le dispositif de nivellement robotisé vers une seconde cellule de grille sur la structure de grille ;
c) mesurer une seconde position verticale du dispositif de nivellement robotisé au niveau de la seconde cellule de grille sur la structure de grille par rapport aux un ou plusieurs points de référence fixes sur la structure de grille ;
d) calculer la différence entre la seconde position verticale et la première position verticale ;
e) si la différence calculée est supérieure à une valeur prédéterminée, ajuster la longueur de l'entretoise ajustable en mettant en prise l'outil ajustable avec l'entretoise ajustable de manière à faire tourner les premier et/ou second mécanismes d'indexage rotatifs dans leurs première et seconde direction de rotation respectives autour de l'axe de rotation jusqu'à ce que la différence calculée soit inférieure à la valeur prédéterminée.
